# EUROPEAN PATENT APPLICATION

(11) **EP 4 790 854 A1**
(43) Date of publication of application: **12.08.2026**
(21) Application number: 26156821.6
(22) Date of filing: 06.02.2026
(51) Int. Cl.: H02B 1/20, H02B 13/025

(54) **POWER CABINET**

(30) Priority: 08.02.2025 CN 202510144085; 12.08.2025 CN 202511130907
(71) Applicant: Huawei Technologies Co., Ltd., Shenzhen, Guangdong 518129 (CN)
(72) Inventor: ZHOU, Xudong, Shenzhen, 518129 (CN); SUN, Jisheng, Shenzhen, 518129 (CN); DONG, Ya, Shenzhen, 518129 (CN); ZHANG, Xiufeng, Shenzhen, 518129 (CN); ZHAO, Fugao, Shenzhen, 518129 (CN)
(74) Representative: Isarpatent

(57) **Abstract**

Embodiments of this application provide a power cabinet, and are related to the field of energy technologies. The power cabinet includes a cabinet body, a circuit breaker, and a busbar, the circuit breaker and the busbar are both fastened in the cabinet body, the circuit breaker is connected to the busbar, and the circuit breaker has a plurality of arc spray vents facing the busbar. The power cabinet further includes a collection apparatus fastened in the cabinet body, the collection apparatus includes a housing and at least one baffle plate fastened in the housing, the housing has an outlet and a plurality of inlets, all the outlet and the plurality of inlets are in communication with an internal space of the housing, the plurality of inlets are located on a same side of the outlet, each inlet is in communication with one arc spray vent, and a baffle plate is disposed between at least two adjacent inlets; and each baffle plate is fastened to a side wall of the housing facing the circuit breaker; or an included angle between a surface of the housing that is used to abut against an inclined segment and each inclined segment is an acute angle. By using the foregoing technical solutions, gas sprayed from the circuit breaker can be guided and constrained, so that the power cabinet operates more stably.

## Description

This application claims priority to Chinese Patent Application No. 202510144085.9, filed with the China National Intellectual Property Administration on February 8, 2025 and entitled "POWER CABINET", which is incorporated herein by reference in its entirety.

### TECHNICAL FIELD

This application relates to the field of energy technologies, and in particular, to a power cabinet.

### BACKGROUND

A power cabinet is an indispensable device in a data center and is mainly used to supply power to a device that requires high power stability. For example, the power cabinet may be an uninterruptible power supply (UPS) in the form of a cabinet.

In a related technology, a circuit breaker is disposed in the power cabinet. When the circuit breaker performs breaking, high-voltage charged gas is sprayed from an arc spray vent. The gas is attached to a busbar, causing the busbar to be ablated or blackened. This also affects other components and devices around the circuit breaker, making the power cabinet unable to operate stably.

### SUMMARY

This application provides a power cabinet, to guide and constrain gas sprayed from a circuit breaker, so that the power cabinet operates more stably.

To achieve the foregoing objective, this application uses the following technical solutions.

This application provides a power cabinet, where the power cabinet includes a cabinet body, a circuit breaker, and a busbar, both the circuit breaker and the busbar are fastened in the cabinet body, the circuit breaker is connected to the busbar, the circuit breaker has a plurality of arc spray vents facing the busbar, and an arrangement direction of the plurality of arc spray vents is perpendicular to an arrangement direction of the circuit breaker and the busbar. The power cabinet further includes a collection apparatus fastened in the cabinet body. The collection apparatus is located on a side of the circuit breaker facing the busbar. The collection apparatus includes a housing and at least one baffle plate fastened in the housing. The housing has an outlet and a plurality of inlets. All the outlet and the plurality of inlets are in communication with an internal space of the housing. The plurality of inlets are located on a same side of the outlet in the arrangement direction of the plurality of arc spray vents, each inlet is in communication with one arc spray vent, and a baffle plate is disposed between at least two adjacent inlets.

The busbar may include a busbar used for current input and a busbar used for current output. Both the busbar used for current input and the busbar used for current output may be connected to the circuit breaker (for example, the busbar is connected to a connection terminal of the circuit breaker) to implement an electrical connection to the circuit breaker. When the circuit breaker breaks the busbar used for current input and the busbar used for current output (for example, by using a movable contact and a static contact), high-voltage charged gas will be sprayed from the arc spray vent of the circuit breaker. The circuit breaker has a plurality of arc spray vents. For example, the circuit breaker may be a multiphase circuit breaker and is configured to break off multiphase electricity. Gas generated by breaking currents of different phases by the circuit breaker is sprayed from corresponding arc spray vents.

The housing of the collection apparatus is in communication with corresponding arc spray vents through a plurality of inlets, and gas sprayed from the arc spray vents enters the housing of the collection apparatus through the inlets, instead of spreading around after being sprayed from the arc spray vents. The housing constrains the gas sprayed from the circuit breaker, thereby reducing a possibility that a busbar at a rear side of the circuit breaker and a peripheral component are affected by the gas sprayed from the circuit breaker. In addition, the housing also provides a space for cooling and precipitation for the gas sprayed from the circuit breaker. Before impurities in the gas are sprayed from the outlet of the housing, a part of the impurities are precipitated in the housing, thereby reducing impact of the impurities on the busbar and another component in the cabinet body. The housing may further prolong time for discharging internal gas, so that high-temperature gas is cooled in the housing before being discharged from the outlet, thereby reducing a temperature of the gas discharged from the housing.

In addition, a position of the outlet may be further set based on a requirement, so that the gas sprayed from the arc spray vent can be discharged to a better position (a position that has little impact on the busbar and another component in the cabinet body) through guidance by the housing, thereby reducing a possibility that the busbar is scorched or blackened, and reducing a risk that the busbar generates arcing, so that the power cabinet operates more stably.

Because the gas sprayed from the plurality of arc spray vents gathers in the housing, there is a possibility of generating arcing or short-circuiting by charged gas from different arc spray vents in the housing. In this application, insulation performance may be improved by disposing a baffle plate.

In an example, each baffle plate is fastened to a side wall of the housing facing the circuit breaker, and a channel exists between each baffle plate and a side wall of the housing away from the circuit breaker. That is, the charged gas sprayed from the arc spray vent flows through the channel and is discharged from the outlet, and the baffle plate is close to the arc spray vent, so that two adjacent arc spray vents are physically isolated, thereby increasing a creepage distance between the two adjacent arc spray vents.

In another example, each baffle plate is configured to separate the inlets on two sides, each baffle plate includes at least one elastic inclined segment, an end portion of each inclined segment facing the outlet is configured to abut against the housing, an end portion of each inclined segment away from the outlet is fastened to the housing, and an included angle between a surface of the housing used to abut against the inclined segment and each inclined segment is an acute angle. Gas sprayed from an arc spray vent located on a side of the baffle plate facing the outlet is blocked by the baffle plate (the inclined segment abuts against the housing and cannot bend toward a side away from the outlet), thereby reducing a possibility that the gas sprayed from the arc spray vent flows back to the side away from the outlet, so that the gas sprayed from the arc spray vent can be quickly discharged from the outlet, and a possibility that arcing or short-circuiting is generated by charged gas sprayed from different arc spray vents is reduced. The gas sprayed from the arc spray vent located on the side of the baffle plate away from the outlet can apply an external force to the baffle plate to bend the baffle plate (which may be understood as pushing the baffle plate open). The gas sprayed from the arc spray vent can flow to the outlet through a slit between the baffle plate (the baffle plate pushed open) and the housing, and finally is discharged to the outside of the housing through the outlet.

In an optional implementation, the power cabinet further includes a cabinet door, the cabinet door is connected to the cabinet body, the cabinet door is capable of moving relative to the cabinet body, and the cabinet door is configured to block or open an internal space of the cabinet body; and the plurality of arc spray vents are away from the cabinet door, the plurality of arc spray vents are arranged in a height direction of the cabinet body, and the outlet is located above the circuit breaker and faces the cabinet door.

Because the arc spray vent of the circuit breaker faces an inner side of the cabinet body (the arc spray vent is away from the cabinet door), a direction the arc spray vent faces is a position of the busbar, and the outlet of the housing is located above the circuit breaker and faces the cabinet door. To be specific, the outlet is away from the busbar and discharges the gas in the housing to a position away from the busbar, thereby reducing a possibility that the gas sprayed by the circuit breaker is attached to the busbar, reducing a possibility that the busbar is scorched or blackened, and further reducing impact of impurities discharged from the outlet on another component in the cabinet body, so that the power cabinet operates more stably.

In an optional implementation, the power cabinet further includes a first protection plate and a second protection plate, the first protection plate is located above the circuit breaker, the first protection plate is farther away from the circuit breaker than the outlet, the second protection plate is located on a side of the outlet facing the cabinet door, and a space enclosed by the first protection plate, the second protection plate, and the circuit breaker is in communication with the outlet.

There may be some other structures above the circuit breaker. For example, there may be some metal bars (different from the busbar, where the busbar specially means a busbar an arc spray vent faces in this application) above the circuit breaker. The first protection plate can protect the other structures above the circuit breaker, thereby reducing a possibility that gas discharged from the outlet affects the other structures above the circuit breaker. In addition, the second protection plate blocks and shields the gas discharged from the outlet, so that the gas in the housing is discharged into a relatively independent space in the cabinet body through the outlet (the first protection plate, the second protection plate, and the circuit breaker enclose to form the space). In this way, a possibility that the gas discharged from the housing affects other structures and components around the outlet can be reduced.

In an optional implementation, the housing includes an accommodation part and a plurality of communication parts fastened to the accommodation part, the plurality of communication parts protrude from the accommodation part to the circuit breaker, the plurality of communication parts are spaced apart in the arrangement direction of the plurality of arc spray vents, the inlet is disposed at an end portion of each communication part away from the accommodation part, and the outlet is disposed at the accommodation part; and the baffle plate is fastened in the accommodation part, and the baffle plate is disposed between at least two adjacent communication parts.

Because the plurality of arc spray vents on the circuit breaker are usually spaced apart, the housing has a plurality of communication parts protruding outward from the accommodation part, and each inlet is disposed on one communication part. Because the plurality of communication parts are spaced apart, each communication part may be connected to a corresponding arc spray vent, so as to implement communication between the inlet on the communication part and the arc spray vent.

In an optional implementation, an end portion of each communication part that is provided with the inlet is inserted into one arc spray vent.

A connection between the communication part and the arc spray vent is implemented in a plug-in manner, so as to facilitate mounting of the collection apparatus and implement quick communication between the housing and the circuit breaker.

In an optional implementation, the power cabinet further includes a sealing structure, and each communication part is hermetically connected to a corresponding arc spray vent through the sealing structure.

The sealing structure is disposed at a connection position between the communication part and the arc spray vent, so that when the communication part and the arc spray vent are hermetically connected, a possibility that the gas sprayed from the arc spray vent leaks from the connection position between the communication part and the arc spray vent can be reduced.

In an optional implementation, the side wall of the housing away from the circuit breaker is disposed obliquely, and an end portion that is of the side wall of the housing away from the circuit breaker and that faces the outlet is farther away from the circuit breaker than an end portion away from the outlet.

In a direction from the plurality of inlets to the outlet (that is, in a discharge direction of the gas in the housing), the side wall of the housing away from the circuit breaker is inclined toward a side away from the circuit breaker, and under guidance by the side wall of the housing away from the circuit breaker, the gas sprayed from the arc spray vent can flow along the side wall toward the outlet. This helps the gas in the housing be discharged outward through the outlet, and reduces a possibility that the gas in the housing flows back toward a side away from the outlet.

In an optional implementation, the plurality of inlets are arranged in the height direction of the cabinet body, and a part of an inner surface of the housing is located below an inlet with a lowest height among the plurality of inlets.

Some impurities are contained in the gas sprayed from the arc spray vent. Not all of these impurities can be discharged from the outlet, and impurities that cannot be discharged from the outlet are precipitated at the bottom of the housing. Therefore, a part of the inner surface of the housing is located below a lowest inlet. To be specific, a space that can accommodate the precipitate is available at the bottom of the housing, thereby reducing a possibility that the precipitate returns to the arc spray vent.

In an optional implementation, each baffle plate is fastened to the side wall of the housing facing the circuit breaker, each baffle plate has a first surface and a second surface, an arrangement direction of the first surface and the second surface is parallel to the arrangement direction of the plurality of arc spray vents, the first surface is closer to the outlet than the second surface, and the first surface is inclined toward the outlet in a direction from the circuit breaker to the housing.

The first surface is disposed obliquely, and the first surface can guide the gas sprayed from the arc spray vent. Under the guidance by the first surface, the gas sprayed from the arc spray vent on a side of the baffle plate facing the outlet can flow toward the outlet, so that a possibility that the gas sprayed from the arc spray vent flows back toward the side away from the outlet is reduced, helping the gas in the housing be discharged through the outlet.

In an optional implementation, the second surface is inclined toward the outlet in the direction from the circuit breaker to the housing.

To be specific, the second surface may also be disposed obliquely and guide the gas sprayed from the arc spray vent. Under the guidance by the second surface, the gas sprayed from the arc spray vent located on a side of the baffle away from the outlet can flow along the second surface toward the outlet. In a process in which the gas sprayed from the arc spray vent flows toward the outlet, the second surface imposes small obstruction on the gas, helping the gas in the housing be discharged through the outlet.

In an optional implementation, each baffle plate includes at least one inclined segment, each inclined segment has a plurality of slits, and the plurality of slits extend to an end portion of the inclined segment that is used to abut against the housing.

When the baffle plate includes the inclined segment, a part of the inclined segment that is provided with a slit is more easily bent. Because the slit extends to an end portion of the inclined segment abutting against the housing, under an action of pressure of the gas sprayed from the arc spray vent, the end portion of the inclined part that is used to abut against the housing is more easily separated from the housing, which helps the gas sprayed from the arc spray vent flow toward the outlet.

In an optional implementation, each baffle plate includes at least one inclined segment, the collection apparatus further includes a limiting block fastened in the housing, the limiting block is fastened on a side of the inclined segment facing the outlet and is configured to abut against the inclined segment, and the limiting block is located between an end portion of the inclined segment facing the outlet and an end portion of the inclined segment away from the outlet.

In a case that the inclined segment is bent when subject to a force, the limiting block can limit a bending degree of the inclined segment, thereby reducing a possibility that the inclined segment is damaged or broken due to excessive bending.

In an optional implementation, each baffle plate includes two inclined segments, an arrangement direction of the two inclined segments is parallel to an arrangement direction of the housing and the circuit breaker, end portions of the two inclined segments away from the outlet are fastened to each other, an end portion of one inclined segment facing the outlet abuts against the side wall of the housing facing the circuit breaker, and an end portion of the other inclined segment facing the outlet abuts against the side wall of the housing away from the circuit breaker.

The two inclined segments of the baffle plate are fastened, so that the baffle plate forms a "V"-shaped structure. The two inclined segments enclose to form a space that can accommodate impurities, so that impurities that cannot be discharged through the outlet are deposited on the baffle plate. In addition, the "V"-shaped baffle plate can also guide, through the two inclined segments, the gas sprayed from the arc spray vent to end portions that are of the two inclined segments and that abut against the housing, and after the two inclined segments are bent toward the outlet when subject to a force, the gas sprayed from the arc spray vent flows toward the outlet from a gap between the inclined segments and the housing. In addition, because a flow direction of the gas sprayed from the arc spray vent after the gas just enters the housing is approximately parallel to the arrangement direction of the housing and the circuit breaker, an arrangement direction of the two inclined segments is parallel to the arrangement direction of the housing and the circuit breaker, which is more conducive to subjecting the two inclined segments to a force (pressure of the gas sprayed from the arc spray vent), and makes the inclined segments more easily bent.

In an optional implementation, the baffle plate is disposed between the outlet and an adjacent inlet.

In some cases, the baffle plate may also be disposed between the outlet and the adjacent inlet. The baffle plate at this position can block, to some extent, impurities flowing back from the outside to the housing, thereby reducing a possibility that the external impurities are precipitated at the bottom of the housing after entering the housing.

In an optional implementation, the power cabinet further includes a mounting plate fastened in the cabinet body, and the plurality of arc spray vents face the mounting plate; and the housing is fastened to the mounting plate, a part of the housing is located on a side of the mounting plate away from the circuit breaker, the other part of the housing passes through the mounting plate and extends to a side of the mounting plate facing the circuit breaker, and the plurality of inlets are located on the side of the mounting plate facing the circuit breaker and are respectively in communication with corresponding arc spray vents.

The mounting plate functions to fasten the collection apparatus. The housing may be first enabled to pass through the mounting plate, and the inlet of the housing is enabled to extend to the side of the mounting plate facing the circuit breaker, so that the inlet is in communication with the arc spray vent of the circuit breaker. Then, the housing is fastened on the mounting plate, and the position of the housing is limited by using the mounting plate, thereby reducing a possibility that the housing becomes loose. In addition, in some cases, the circuit breaker may be mounted in the cabinet body in a plug-in manner. In a process of inserting the circuit breaker, the arc spray vent of the circuit breaker is in communication with the inlet of the housing. Under a limiting effect of the mounting plate, a possibility of the housing shaking randomly is low, which facilitates communication between the inlet of the housing and the arc spray vent.

In an optional implementation, the mounting plate has a through hole, the other part passes through the through hole and extends to the side of the mounting plate facing the circuit breaker, and the plurality of inlets are located at the other part.

A part of the housing that is provided with the plurality of inlets is enabled to pass through a same through hole on the mounting plate, and the plurality of inlets are enabled to be located on the side of the mounting plate facing the circuit breaker, so that the plurality of inlets are in communication with corresponding arc spray vents respectively. A complete through hole is disposed on the mounting plate for the housing to pass through, so that a size of the through hole is relatively large. The size of the through hole is designed based on a requirement. In a process of mounting the housing, the housing may be enabled to pass through the through hole from the side of the mounting plate facing the circuit breaker, to complete mounting of the housing. For example, the side of the mounting plate facing the circuit breaker is a front side of the cabinet body, a person may stand in front of the cabinet body to complete mounting of the collection apparatus.

In an optional implementation, the housing has a protruding plate, the protruding plate is located on the side of the mounting plate facing the circuit breaker, and the protruding plate is fastened to the mounting plate.

In a process of mounting the housing, the housing is enabled to pass through the through hole from the side of the mounting plate facing the circuit breaker, and the protruding plate of the housing does not pass through the through hole, but is located on the side of the mounting plate facing the circuit breaker. The housing can be mounted by fastening the protruding plate of the housing to the mounting plate.

In an optional implementation, the power cabinet further includes a fastener, the mounting plate has a first mounting hole, the protruding plate has a second mounting hole, and the fastener passes through the first mounting hole and the second mounting hole; and at least a part of the fastener is elastic, two ends of the fastener in an axial direction of the first mounting hole are capable of moving in a radial direction of the first mounting hole, one end of the two ends has a first protrusion, and the first protrusion is located on a side of the protruding plate away from the mounting plate and is configured to abut against the protruding plate; and the other end of the two ends has a second protrusion, and the second protrusion is located on a side of the mounting plate away from the protruding plate and is configured to abut against the mounting plate.

The mounting plate and the protruding plate of the housing are connected by using the fastener. Both ends of the fastener can move in the radial direction of the first mounting hole. For example, if the fastener is inserted from a side of the second mounting hole away from the first mounting hole, the end of the fastener having the second protrusion can move in the radial direction of the first mounting hole, so that the second protrusion can be inserted into the second mounting hole and sequentially pass through the second mounting hole and the first mounting hole. Finally, the second protrusion is located on the side of the mounting plate away from the protruding plate. Because the second protrusion is no longer limited by the first mounting hole and the second mounting hole, a position of the second protrusion is restored (the second protrusion moves in a reverse direction of the radial direction of the first mounting hole). In this case, the mounting plate and the protruding plate are located between the first protrusion and the second protrusion. When the fastener continues to be pushed in a direction from the protruding plate to the mounting plate, the first protrusion abuts against the protruding plate. When the fastener is pulled out in a direction from the mounting plate to the protruding plate, the second protrusion abuts against the mounting plate.

If the fastener needs to be pulled out, the fastener can be pulled out by enabling only one end of the fastener to move in the radial direction of the first mounting hole. For example, the fastener is pulled out from the side of the second mounting hole away from the first mounting hole, so that the end of the fastener having the second protrusion moves in the radial direction of the first mounting hole, the second protrusion can be inserted into the first mounting hole and sequentially passes through the first mounting hole and the second mounting hole, and finally the fastener is pulled out.

In an optional implementation, a gap exists between a part of the fastener that is located in the first mounting hole and an inner wall surface of the first mounting hole, and a gap exists between a part of the fastener that is located in the second mounting hole and an inner wall surface of the second mounting hole.

Because a size error exists in the housing, the mounting plate, or the circuit breaker, the housing may not be fully adapted to the mounting plate or the circuit breaker in a mounting process. Therefore, in this design manner, the housing can move relative to the mounting plate, so that the inlet of the housing is in communication with the arc spray vent on the circuit breaker.

In an optional implementation, the power cabinet further includes a mounting assembly, the mounting assembly includes a sleeve and a bolt, the mounting plate has a first mounting hole, the sleeve passes through the first mounting hole, the bolt passes through the sleeve and is connected to the housing, one end of the sleeve abuts against a head of the bolt, the other end of the sleeve abuts against the housing, and a hole diameter of the first mounting hole is able to prevent the head of the bolt from passing through the first mounting hole; and a length of the sleeve is greater than a thickness of the mounting plate, and/or a gap for the sleeve to move exists between a surface of the mounting plate that encloses to form the first mounting hole and an outer circumferential surface of the sleeve.

The housing may be fastened to the mounting plate through a bolt connection. However, because a size error exists in the housing, the mounting plate, or the circuit breaker, the housing may not be fully adapted to the mounting plate in a mounting process. Therefore, the sleeve needs to be disposed to enable the housing to move relative to the mounting plate. For example, when the length of the sleeve is greater than the thickness of the mounting plate, the sleeve and the bolt can move in an axial direction of the bolt with the housing, to absorb a size error in this direction. For another example, when a gap exists between the surface of the mounting plate that encloses to form the first mounting hole and the outer circumferential surface of the sleeve, the sleeve and the bolt can move in the radial direction of the bolt with the housing.

In an optional implementation, the busbar passes through the mounting plate and is connected to the circuit breaker, and the busbar is fastened to the mounting plate.

The mounting plate may also play a role of fastening the busbar. That is, in a process of mounting the busbar, the busbar may be first enabled to pass through the mounting plate, and then the busbar is fastened on the mounting plate (for example, fastened by using a bolt and a nut), so as to limit the busbar, thereby reducing a possibility that the busbar becomes loose. In addition, in some cases, the circuit breaker may be mounted in the cabinet body in a plug-in manner. In a process of inserting the circuit breaker, the busbar is fastened on the mounting plate, and the busbar is limited by using the mounting plate. The busbar is not likely to be misaligned with a corresponding socket of the circuit breaker (a structure of the circuit breaker connected to the busbar), thereby reducing a possibility of bending or damaging the busbar in a process of mounting the circuit breaker, and facilitating quick mounting of the circuit breaker.

In an optional implementation, the collection apparatus further includes a filter screen, the filter screen is fastened in the housing, and the filter screen is disposed between the outlet and the adjacent inlet.

The filter screen is disposed between the outlet and the adjacent inlet, and the filter screen does not affect discharge of gas in the housing from the outlet. However, the filter screen can block impurities flowing back to the housing from the outside, thereby reducing a possibility that the external impurities enter the housing.

This application further provides a power cabinet, where the power cabinet includes a cabinet body, a circuit breaker, and a busbar, both the circuit breaker and the busbar are fastened in the cabinet body, the circuit breaker is connected to the busbar, the circuit breaker has a plurality of arc spray vents facing the busbar, and the plurality of arc spray vents are arranged in a height direction of the cabinet body; and the power cabinet further includes a housing fastened in the cabinet body, the housing is located on a side of the circuit breaker facing the busbar, the housing and the busbar are arranged in a width direction of the cabinet body, the housing has a plurality of inlets in communication with an internal space of the housing, each inlet is in communication with one arc spray vent, and a side wall of the housing facing the busbar has an outlet in communication with the internal space of the housing, or a side wall of the housing away from the circuit breaker has an outlet in communication with the internal space of the housing.

The housing is in communication with corresponding arc spray vents through a plurality of inlets, and gas sprayed from the arc spray vents enters the housing through the inlets, instead of spreading around after being sprayed from the arc spray vents. The housing imposes a constraint on the gas sprayed from the circuit breaker. In addition, the housing also provides a space for cooling and precipitation for the gas sprayed from the circuit breaker. Before impurities in the gas are sprayed from the outlet of the housing, a part of the impurities are precipitated in the housing, thereby reducing impact of the impurities on the busbar and another component in the cabinet body and making the power cabinet operate more stably. The housing may further prolong time for discharging internal gas, so that high-temperature gas is cooled in the housing before being discharged from the outlet, thereby reducing a temperature of the gas discharged from the housing. In addition, the outlet is located on a side of the housing facing the busbar, or the outlet is located on a side of the housing away from the circuit breaker, and the outlet is not disposed at the bottom of the housing, which does not affect precipitation of impurities in the housing at the bottom of the housing.

In an optional implementation, the outlet faces a bottom of the cabinet body.

Because the busbar and the housing are arranged in the width direction of the cabinet body, and the outlet faces the bottom of the cabinet body, gas discharged from the outlet of the housing is not directly sprayed on the busbar, thereby reducing a possibility that the busbar is scorched or blackened, and reducing a risk that the busbar generates arcing, so that the power cabinet operates more stably.

In an optional implementation, the housing includes an accommodation part and a protruding part, the accommodation part and the busbar are arranged in the width direction of the cabinet body, the plurality of inlets are in communication with an internal space of the accommodation part, the protruding part is fastened on a side wall of the accommodation part facing the busbar, and the outlet is disposed on a wall of the protruding part facing the bottom of the cabinet body.

The outlet is located on an outer side of the accommodation part, and the outlet is disposed on the wall of the protruding part facing the bottom of the cabinet body, so that the outlet discharges gas toward the bottom of the cabinet body. In this way, the gas discharged from the outlet is not directly sprayed on the busbar on the side of the housing. After the circuit breaker performs breaking, impact of the gas discharged from the outlet of the housing (from the arc spray vent) on the busbar is reduced.

### BRIEF DESCRIPTION OF DRAWINGS

FIG. 1 is a diagram of a structure of a power cabinet according to an embodiment of this application;
FIG. 2 is a topology diagram of a power cabinet according to an embodiment of this application;
FIG. 3 is a diagram of a structure of a mounting base according to an embodiment of this application;
FIG. 4 is a diagram of a local structure of a circuit breaker according to an embodiment of this application;
FIG. 5 is a diagram of a structure of a collection apparatus according to an embodiment of this application;
FIG. 6 is a diagram of a split structure of a circuit breaker, a collection apparatus, and a busbar according to an embodiment of this application;
FIG. 7 is a diagram of an internal structure of a circuit breaker according to an embodiment of this application;
FIG. 8 is a diagram of a structure of a baffle plate according to an embodiment of this application;
FIG. 9 is an enlarged view at A in FIG. 8;
FIG. 10 is a diagram of a structure of another baffle plate according to an embodiment of this application;
FIG. 11 is a diagram of a structure of a fastening base according to an embodiment of this application;
FIG. 12 is an enlarged view at B in FIG. 11;
FIG. 13 is a diagram of a structure of still another baffle plate according to an embodiment of this application;
FIG. 14 is a diagram of a structure of still another baffle plate according to an embodiment of this application;
FIG. 15 is a diagram of a structure of still another baffle plate according to an embodiment of this application;
FIG. 16 is a diagram of a structure of another collection apparatus according to an embodiment of this application;
FIG. 17 is a diagram of a structure of still another collection apparatus according to an embodiment of this application;
FIG. 18 is a diagram of a structure of still another collection apparatus according to an embodiment of this application;
FIG. 19 is a diagram of a structure of a mounting plate according to an embodiment of this application;
FIG. 20 is a diagram of a structure of a mounting assembly according to an embodiment of this application;
FIG. 21 is an enlarged view at C in FIG. 20;
FIG. 22 is a diagram of a structure of a protruding plate according to an embodiment of this application;
FIG. 23 is an enlarged view at D in FIG. 22;
FIG. 24 is a diagram of a structure of a through hole according to an embodiment of this application;
FIG. 25 is a diagram of a mounting process of a housing according to an embodiment of this application;
FIG. 26 is a diagram of a structure of a fastener according to an embodiment of this application;
FIG. 27 is an enlarged view at E in FIG. 26 according to an embodiment of this application;
FIG. 28 is a diagram of a structure of a fastening block according to an embodiment of this application;
FIG. 29 is a diagram of a position of an outlet according to an embodiment of this application;
FIG. 30 is a diagram of a position of another outlet according to an embodiment of this application;
FIG. 31 is a diagram of a position of still another outlet according to an embodiment of this application;
FIG. 32 is a diagram of a position of still another outlet according to an embodiment of this application;
FIG. 33 is a diagram of a structure of a housing according to an embodiment of this application;
FIG. 34 is a diagram of a split structure of a circuit breaker, a housing, and a busbar according to an embodiment of this application;
FIG. 35 is a diagram of a position of still another outlet according to an embodiment of this application; and
FIG. 36 is a diagram of a position of still another outlet according to an embodiment of this application.

Reference numerals: 100-power cabinet; 1-cabinet body; 11-first protection plate; 12-second protection plate; 13-bottom plate; 2-cabinet door; 3-circuit breaker; 31-sliding block; 32-socket; 321-first socket; 322-second socket; 323-third socket; 33-arc spray vent; 331-first arc spray vent; 332-second arc spray vent; 333-third arc spray vent; 34-movable contact; 35-arc extinguishing chamber; 36-arc suppression plate; 41-power module; 42-bypass module; 5-mounting base; 51-mounting cavity; 52-mounting opening; 53-sliding slot; 6-busbar; 61-first busbar; 62-second busbar; 63-third busbar; 7-collection apparatus; 71-housing; 710-recess part; 7101-accommodating space; 711-outlet; 712-inlet; 713-accommodation part; 714-communication part; 715-protruding plate; 7151-second mounting hole; 716-first part; 7161-first stepped structure; 717-second part; 7171-second stepped structure; 718-protruding part; 72-baffle plate; 721-first baffle plate; 722-second baffle plate; 723-third baffle plate; 724-fourth baffle plate; 725-channel; 726-first surface; 727-second surface; 728-inclined segment; 7281-first inclined segment; 7282-second inclined segment; 73-fastening base; 731-fastening slot; 74-limiting block; 75-slit; 76-filter screen; 8-sealing structure; 81-sealing ring; 82-detent ring; 9-mounting plate; 91-first mounting hole; 92-through hole; 10-mounting assembly; 101-bolt; 102-nut; 103-sleeve; 1031-flange; 110-fastener; 1101-first protrusion; 1102-second protrusion; 1103-fastening block; 1104-first movable bar; 1105-second movable bar; 1106-stepped surface.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

In this application, unless otherwise expressly specified and limited, orientations or position relationships indicated by terms such as "up", "down", "front", "back", "left", and "right" may include but are not limited to be defined with respect to orientations of components schematically placed in the accompanying drawings. These directional terms may be relative concepts, may be used for relative description and clarification, and may vary correspondingly based on changes of the placement orientations of the components in the accompanying drawings. Such terms cannot be understood as a limitation on this application.

In this application, the terms "first", "second", and the like are merely intended for a purpose of description, and are intended to distinguish between one element and another element, but cannot be understood as an indication or implication of relative importance or an implicit indication of a quantity of indicated technical features. Therefore, a feature defined by "first", "second", or the like may explicitly or implicitly include one or more features.

In this application, unless otherwise expressly specified and limited, "a plurality of" means two or more.

In addition, in this application, the term "example", "for example", or the like indicates giving an example, an illustration, or a description. Any embodiment or design scheme described as an "example" or "for example" in this application should not be construed as being more preferred or having more advantages than another embodiment or design scheme. To be precise, use of the term like "example" or "for example" is intended to present a relative concept in a specific manner.

In the accompanying drawings of embodiments of this application, entity structures such as components and assemblies are represented by guide lines. A structure including a plurality of components is represented by parentheses or guide lines with solid arrows. Hollow structures such as openings, holes, spaces, and chambers are represented by guide lines with hollow arrows.

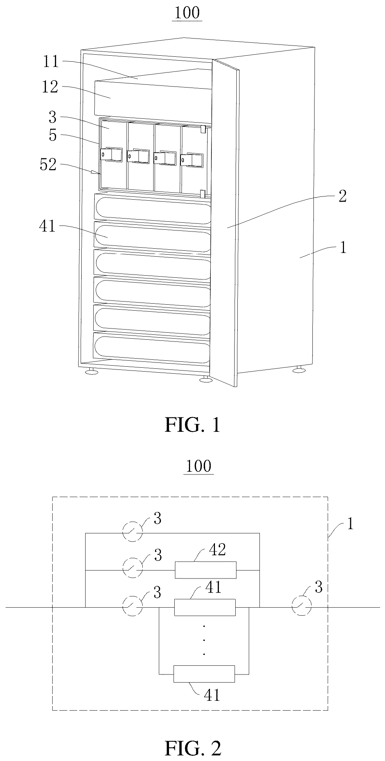

An embodiment of this application provides a power cabinet 100, for example, an uninterruptible power supply (UPS) in the form of an equipment cabinet. FIG. 1 shows an example of a structure of a power cabinet 100. The power cabinet 100 includes a cabinet body 1, a cabinet door 2, a circuit breaker 3, and a plurality of power modules 41.

The cabinet body 1 may be any device cabinet that can be used to mount devices and components. A plurality of devices and components are mounted in an internal space of the cabinet body 1. The cabinet door 2 is connected (for example, hinged) to the cabinet body 1, so that the cabinet door 2 can move (for example, rotate) relative to the cabinet body 1. The cabinet door 2 is configured to open or block the internal space of the cabinet body 1.

Refer to FIG. 1. The circuit breaker 3 is mounted in the cabinet body 1, and a quantity of circuit breakers 3 may be set based on a requirement. For example, one circuit breaker 3 may be disposed, or a plurality of circuit breakers 3 may be disposed. For example, in the example shown in FIG. 1, a plurality of circuit breakers 3 may be disposed, and the plurality of circuit breakers 3 are distributed in a width direction of the cabinet body 1. The width direction of the cabinet body 1 means a transverse direction when facing the cabinet body 1 after the cabinet door 2 is opened. In another example, the plurality of circuit breakers 3 may alternatively be distributed in a height direction of the cabinet body 1. It should be noted that the height direction of the cabinet body 1 means a gravity direction or a vertical direction after the cabinet body 1 is placed at a specified position.

In addition, the plurality of power modules 41 are mounted in the cabinet body 1. For example, in the example shown in FIG. 1, the plurality of power modules 41 are stacked in the height direction of the cabinet body 1, and the plurality of power modules 41 are located below the circuit breaker 3. In some other examples, the plurality of power modules 41 are located above the circuit breaker 3. This is not specifically limited in this application. The plurality of power modules 41 may be connected in series, or the plurality of power modules 41 may be connected in parallel, or some of the plurality of power modules 41 may be connected in series and some of the plurality of power modules 41 may be connected in parallel. This is not specifically limited in this application. The power module 41 is configured to perform power conversion on input electric energy and output converted electric energy. For example, the power module 41 can convert an input alternating current into a direct current. For another example, the power module 41 can convert an input direct current into an alternating current. For another example, the power module 41 can boost or step down input electric energy.

FIG. 2 shows an example of a topology diagram of a power cabinet 100. Refer to FIG. 2. Four circuit breakers 3 may be disposed. For example, the power cabinet 100 has three branches, one branch is connected to a plurality of power modules 41, another branch is connected to a bypass module 42 (for example, a backup power supply, whose optimization capability for electric energy is weaker than that of the power module 41), and the rest branch represents direct power supply of the mains. Each branch is mounted with one circuit breaker 3. In addition, one circuit breaker 3 is also disposed on a main branch.

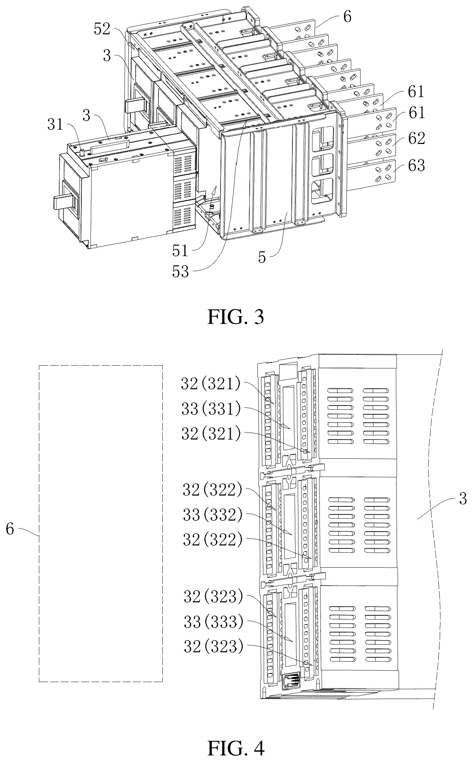

In this application, the circuit breaker 3 may be mounted in the cabinet body 1 in any proper manner. In an example, the circuit breaker 3 may be mounted in the cabinet body 1 in a plug-in manner. For example, the power cabinet 100 further includes a mounting base 5 for inserting the circuit breaker 3. FIG. 3 shows an example of a structure of a mounting base 5. Refer to FIG. 3. The mounting base 5 is fastened in the cabinet body 1. For a position relationship between the mounting base 5 and the cabinet body 1, refer to FIG. 1. The circuit breaker 3 may be inserted into the mounting base 5 in a thickness direction of the cabinet body 1, so that the inserted circuit breaker 3 is fastened in the cabinet body 1. Every two of the thickness direction of the cabinet body 1, the width direction of the cabinet body 1, and the height direction of the cabinet body 1 are perpendicular to each other.

Refer to FIG. 3. The mounting base 5 has a mounting cavity 51 and a mounting opening 52 for the circuit breaker 3 to enter the mounting cavity 51, and the mounting opening 52 may face the cabinet door 2 (the cabinet door 2 in a closed state is used as a reference, and for an orientation of the mounting opening 52, refer to FIG. 1). In the example shown in FIG. 3, when the circuit breaker 3 needs to be inserted into the mounting base 5, the circuit breaker 3 may be inserted into the mounting cavity 51 from the mounting opening 52, a sliding block 31 on the circuit breaker 3 cooperates with a corresponding sliding slot 53 on the mounting base 5 to slide, and the sliding slot 53 limits and guides the sliding block 31, that is, guides an insertion direction and a mounting path of the circuit breaker 3, so as to implement accurate insertion of the circuit breaker 3 into the mounting base 5. It may be understood that, in FIG. 3, one circuit breaker 3 is not inserted into the mounting base 5, and three circuit breakers 3 have been inserted. When the circuit breaker 3 needs to be pulled out, the cabinet door 2 is opened to pull the circuit breaker 3 toward the cabinet door 2.

In addition, in some examples, another auxiliary apparatus (for example, a handle) may alternatively be used to assist in insertion and removal of the circuit breaker 3. For example, the circuit breaker 3 may be pushed into the mounting base 5 by using the auxiliary apparatus, and after insertion of the circuit breaker 3 is completed, the auxiliary apparatus may be taken away. For another example, the circuit breaker 3 may alternatively be pulled out from the mounting base 5 by using an auxiliary apparatus, and after the circuit breaker 3 is detached, the auxiliary apparatus is taken away.

Refer to FIG. 3. The power cabinet 100 further includes a plurality of busbars 6. The plurality of busbars 6 are fastened in the cabinet body 1 (for example, are fastened to the cabinet body 1 by using screws), and the circuit breakers 3 are connected to the busbars 6. The circuit breakers 3 are connected to a plurality of busbars 6 in a plurality of manners. For example, FIG. 4 shows an example of a partial structure of a circuit breaker 3. It should be noted that most part of the circuit breaker 3 in FIG. 4 is hidden (not shown in the figure), and only a rear socket of the circuit breaker 3 is left. Refer to FIG. 3 and FIG. 4. A plurality of sockets 32 are disposed on rear sockets of the circuit breakers 3, and the plurality of busbars 6 are respectively inserted into corresponding sockets 32. The socket 32 has a connection terminal (for example, a terminal clip or a bridge-type contact) configured to be electrically connected to the busbar 6, so as to implement an electrical connection between the busbar 6 and the circuit breaker 3.

Refer to FIG. 3 and FIG. 4. The plurality of sockets 32 include two first sockets 321, and the plurality of busbars 6 include two first busbars 61 (for example, copper bars or aluminum bars). One of the two first busbars 61 may be a busbar 6 used for current input, and the other may be a busbar 6 used for current output. Each first busbar 61 is inserted into a corresponding first socket 321. After being inserted into the circuit breaker 3, the two first busbars 61 are respectively electrically connected to different static contacts through a conductive structure in the circuit breaker 3. When the circuit breaker 3 performs breaking, a movable contact of the circuit breaker 3 breaks two static contacts respectively electrically connected to different first busbars 61, so as to implement breaking of the two first busbars 61.

In addition, the circuit breaker 3 may alternatively be a multiphase circuit breaker 3. For example, refer to FIG. 3 and FIG. 4. The circuit breaker 3 is a three-phase circuit breaker, the plurality of sockets 32 further include two second sockets 322 and two third sockets 323, the busbars 6 further include two second busbars 62 (for example, copper bars or aluminum bars) and two third busbars 63 (for example, copper bars or aluminum bars), and each second busbar 62 is inserted into a corresponding second socket 322 to implement a connection to the circuit breaker 3. Each third busbar 63 is inserted into a corresponding third socket 323 to implement a connection to the circuit breaker 3. The circuit breaker 3 may break the two first busbars 61, or may break the two second busbars 62, or may break the two third busbars 63.

When the circuit breaker 3 performs breaking, high-voltage charged gas is sprayed. To discharge the gas, the circuit breaker 3 has a plurality of arc spray vents 33. Refer to FIG. 3 and FIG. 4. An arrangement direction of the plurality of arc spray vents 33 is perpendicular to an arrangement direction of the circuit breakers 3 and the busbars 6. For example, the plurality of arc spray vents 33 may be arranged in the height direction of the cabinet body 1 (this arrangement manner is shown in this application). The plurality of arc spray vents 33 may alternatively be arranged in the width direction of the cabinet body 1. Gas generated by the circuit breaker 3 when breaking the busbar 6 is sprayed from the arc spray vent 33. For example, the plurality of arc spray vents 33 include a first arc spray vent 331, a second arc spray vent 332, and a third arc spray vent 333. Gas generated by the circuit breaker 3 when breaking the two first busbars 61 is sprayed from the first arc spray vent 331, gas generated by the circuit breaker 3 when breaking the two second busbars 62 is sprayed from the second arc spray vent 332, and gas generated by the circuit breaker 3 when breaking the two third busbars 63 is sprayed from the third arc spray vent 333.

Refer to FIG. 3 and FIG. 4. The plurality of arc spray vents 33 face the busbar 6. In addition, in the example shown in FIG. 4, the first arc spray vent 331 is located between the two first sockets 321 (that is, the first arc spray vent 331 is located between the two first busbars 61); the second arc spray vent 332 is located between the two second sockets 322 (that is, the second arc spray vent 332 is located between the two second busbars 62); and the third arc spray vent 333 is located between the two third sockets 323 (that is, the third arc spray vent 333 is located between the two third busbars 63).

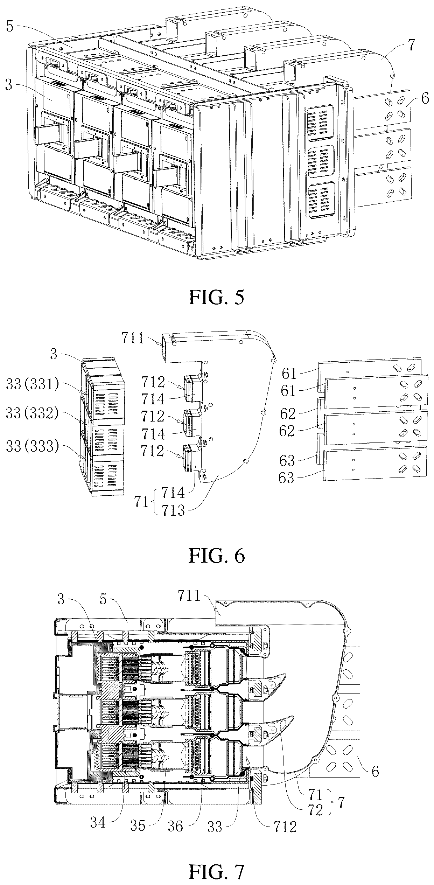

In addition, the power cabinet 100 further includes the collection apparatus 7 fastened in the cabinet body 1. FIG. 5 shows an example of a structure of a collection apparatus 7. The collection apparatus 7 is located on a side of the circuit breaker 3 facing the plurality of busbars 6. FIG. 6 shows an example of a split diagram of a circuit breaker 3, a collection apparatus 7, and a busbar 6. Only a rear socket is reserved for the circuit breaker 3 in FIG. 6. Refer to FIG. 5 and FIG. 6. The collection apparatus 7 includes a housing 71. The housing 71 has an outlet 711 and a plurality of inlets 712. All the outlet 711 and the plurality of inlets 712 are in communication with an internal space of the housing 71. In the arrangement direction of the plurality of arc spray vents 33, the plurality of inlets 712 are located on a same side of the outlet 711. To be specific, all the plurality of inlets 712 are located on a same side of the outlet 711 in the arrangement direction of the plurality of arc spray vents 33. For example, when the plurality of arc spray vents 33 are arranged in the height direction of the cabinet body 1, all the plurality of inlets 712 may be located below the outlet 711 (this arrangement manner is shown in this application), or all the plurality of inlets 712 may be located above the outlet 711. For another example, when the plurality of arc spray vents 33 are arranged in the width direction of the cabinet body 1, all the plurality of inlets 712 may be located on a left side of the outlet 711 (a left side when facing the internal space of the cabinet body 1 after the cabinet door 2 is opened), or all the plurality of inlets 712 may be located on a right side of the outlet 711 (a right side when facing the internal space of the cabinet body 1 after the cabinet door 2 is opened).

In an example provided in this application, refer to FIG. 6. The outlet 711 may be one independent opening. In some other examples, the outlet 711 may alternatively include a plurality of independent openings. This is not specifically limited in this application.

FIG. 7 shows an example of an internal structure of a circuit breaker 3. Refer to FIG. 7. The housing 71 of the collection apparatus 7 is in communication with corresponding arc spray vents 33 through a plurality of inlets 712. In other words, each inlet 712 is in communication with one arc spray vent 33. After the movable contact 34 inside the circuit breaker 3 is broken from the static contact, an arc extinguishing chamber 35 (including a plurality of arc suppression grid plates) is configured to eliminate an electric arc generated when the movable contact 34 is broken from the static contact. A plurality of arc suppression plates 36 (each arc suppression plate 36 has a plurality of through holes) are located on a side of the arc extinguishing chamber 35 away from the movable contact 34, and the plurality of arc suppression plates 36 can perform arc suppression and filtering on gas sprayed from the arc extinguishing chamber 35, to purify the gas sprayed from the arc extinguishing chamber 35. After passing through the plurality of arc suppression plates 36, the gas sprayed from the arc extinguishing chamber 35 is sprayed to the outside of the circuit breaker 3 from the arc spray vent 33 and enters the collection apparatus 7.

Refer to FIG. 7. Gas sprayed from the arc spray vent 33 enters the housing 71 of the collection apparatus 7 through the inlet 712, instead of spreading around after being sprayed from the arc spray vent 33. The housing 71 of the collection apparatus 7 constrains the gas sprayed from the circuit breaker 3, thereby reducing a possibility that a busbar 6 at a rear side of the circuit breaker 3 and a peripheral component of the circuit breaker 3 are affected by the gas sprayed from the circuit breaker 3. In addition, the housing 71 also provides a cooling space and a precipitation space for the gas sprayed from the circuit breaker 3. Before impurities in the gas are sprayed from the outlet 711, a part of the impurities are precipitated in the housing 71, thereby reducing impact of the impurities on the busbar 6 and another component in the cabinet body 1. In addition, the housing 71 may further prolong time for discharging internal gas, so that high-temperature gas is cooled in the housing 71 before being discharged from the outlet 711, thereby reducing a temperature of the gas discharged from the housing 71.

In this application, a position of the outlet 711 may be set based on a requirement, so that the gas sprayed from the arc spray vent 33 can be discharged to a better position (a position that has little impact on the busbar 6 and another component in the cabinet body 1) through guidance by the housing 71, thereby reducing a possibility that the busbar 6 is scorched or blackened, and reducing a risk that the busbar 6 generates arcing, so that the power cabinet 100 operates more stably.

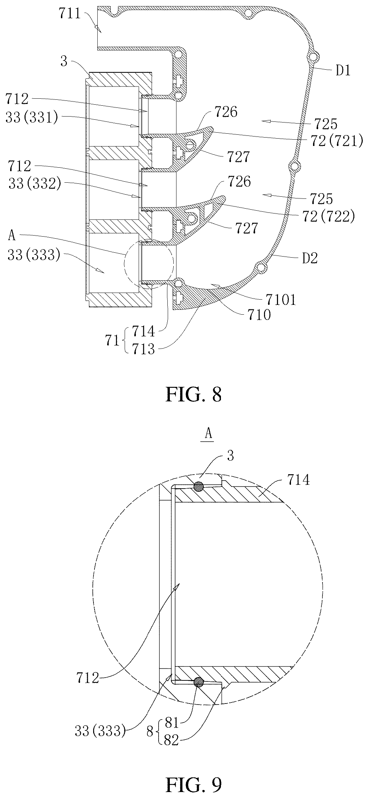

The housing 71 may be of any suitable structure. For example, FIG. 8 shows an example of a structure of a housing. Refer to FIG. 8. The housing 71 includes an accommodation part 713 and a plurality of communication parts 714 fastened to the accommodation part 713. The plurality of communication parts 714 are in communication with the accommodation part 713, the plurality of communication parts 714 protrude from the accommodation part 713 to the circuit breaker 3, and the outlet 711 is disposed on the accommodation part 713. An inlet 712 is disposed at an end portion of each communication part 714 away from the accommodation part 713. Because the plurality of arc spray vents 33 on the circuit breaker 3 are usually spaced apart, the plurality of communication parts 714 are spaced apart in the arrangement direction of the plurality of arc spray vents 33, thereby implementing communication between the inlet 712 on each communication part 714 and a corresponding arc spray vent 33.

In addition, the inlet 712 of the housing 71 may be in communication with the arc spray vent 33 in any proper manner. For example, when the housing 71 includes the accommodation part 713 and the plurality of communication parts 714, each communication part 714 may be inserted into one corresponding arc spray vent 33. A connection between the communication part 714 and the arc spray vent 33 is implemented in a plug-in manner, so as to facilitate mounting of the collection apparatus 7. In some other examples, alternatively the communication part 714 may not be inserted into the arc spray vent 33, but is in communication with the arc spray vent 33 in a slot interconnection manner.

After the communication part 714 is connected to the arc spray vent 33, a connection position between each communication part 714 and a corresponding arc spray vent 33 may be sealed (that is, the communication part 714 is hermetically connected to the corresponding arc spray vent 33), so as to reduce a possibility that gas sprayed from the arc spray vent 33 leaks from the connection position between the communication part 714 and the arc spray vent 33. For example, FIG. 9 is an enlarged view at A in FIG. 8. Refer to FIG. 9. The collection apparatus 7 further includes a sealing structure 8, and each communication part 714 is hermetically connected to a corresponding arc spray vent 33 through the sealing structure 8. The sealing structure 8 may include a sealing ring 81, and the sealing ring 81 is clamped between an inner surface of the circuit breaker 3 that encloses to form the arc spray vent 33 and an outer surface of the communication part 714. For example, the sealing ring 81 is sleeved outside the communication part 714, and the communication part 714 carrying the sealing ring 81 is mounted in the arc spray vent 33. By disposing the sealing ring 81, a possibility that gas sprayed from the arc spray vent 33 leaks between the inner surface of the circuit breaker 3 that encloses to form the arc spray vent 33 and the outer surface of the communication part 714 can be reduced.

In addition, refer to FIG. 9. The sealing structure 8 may further include a detent ring 82. The detent ring 82 is fastened to a periphery of the communication part 714 and protrudes toward an outer side of the communication part 714. In addition, after the communication part 714 is inserted into the arc spray vent 33, the detent ring 82 is located outside the arc spray vent 33 and abuts against an outer surface of the circuit breaker 3, and the detent ring 82 can block gas. This further reduces a possibility that the gas sprayed from the arc spray vent 33 leaks from a connection position between the communication part 714 and the arc spray vent 33.

In some other examples, the sealing structure 8 includes an annular sealing protrusion and an annular sealing groove. One of the sealing protrusion and the sealing groove is disposed on the outer surface of the communication part 714, and the other one is disposed on the inner surface of the circuit breaker 3 that encloses to form the arc spray vent 33. After the communication part 714 is inserted into the arc spray vent 33, the sealing protrusion is located in the sealing groove, and a sealed connection between the communication part 714 and the corresponding arc spray vent 33 is implemented through cooperation between the sealing protrusion and the sealing groove.

In some other examples, the communication part 714 is not inserted into the arc spray vent 33. The sealing structure 8 may include an annular sealing protrusion and an annular sealing groove. One of the sealing protrusion and the sealing groove is disposed on a surface of the communication part 714 facing the circuit breaker 3 and surrounds the inlet 712, and the other one is disposed on a surface of the circuit breaker 3 facing the communication part 714 and surrounds the arc spray vent 33. After the inlet 712 of the communication part 714 is in communication with the arc spray vent 33 of the circuit breaker 3, the annular protrusion is inserted into the annular groove, to implement a sealed connection between the communication part 714 and the corresponding arc spray vent 33. When the communication part 714 is not inserted into the arc spray vent 33, the sealing structure 8 may alternatively include the sealing ring 81. After the inlet 712 of the communication part 714 is in communication with the arc spray vent 33 of the circuit breaker 3, the sealing ring 81 is clamped between the surface of the communication part 714 facing the circuit breaker 3 and the surface of the circuit breaker 3 facing the communication part 714.

Refer back to FIG. 8. In some examples, a side wall of the housing 71 away from the circuit breaker 3 may be disposed obliquely, where an end portion (D1) of the side wall facing the outlet 711 is farther away from the circuit breaker 3 than an end portion (D2) of the side wall away from the outlet 711. That is, the side wall is inclined toward a side away from the circuit breaker 3 in a direction from the plurality of inlets 712 to the outlet 711 (a direction of discharging gas in the housing 71). Under guidance by the side wall of the housing 71 away from the circuit breaker 3, the gas discharged from the arc spray vent 33 can flow along the side wall toward the outlet 711, thereby reducing a possibility that the gas in the housing 71 flows back toward a side away from the outlet 711.

In addition, some impurities are contained in the gas sprayed from the arc spray vent 33. Not all of these impurities can be discharged from the outlet 711, and impurities that cannot be discharged from the outlet 711 are precipitated at the bottom of the housing 71. Therefore, in some examples, refer to FIG. 8. The plurality of inlets 712 are arranged in the height direction of the cabinet body 1, and a part of an inner surface of the housing 71 is located below an inlet 712 with a lowest height among the plurality of inlets 712. To be specific, a part (the part is referred to as a recess part 710) of the inner surface of the housing 71 is located below the lowest inlet 712, and the recess part 710 encloses to form an accommodating space 7101 (which is a part of the internal space of the housing 71), so that a space (the accommodating space 7101) that can accommodate the precipitate exists at the bottom of the housing 71, thereby reducing a possibility that the precipitate returns to the arc spray vent 33.

Because the gas sprayed from the plurality of arc spray vents 33 gathers in the housing 71, there is a possibility of generating arcing or short-circuiting by charged gas from different arc spray vents 33 in the housing 71. Therefore, in this application, the collection apparatus 7 further includes at least one baffle plate 72 fastened in the housing 71. Refer to FIG. 8. FIG. 8 also shows an example of a structure of a baffle plate. A baffle plate 72 is disposed between at least two adjacent inlets 712. For example, in an example in which the housing 71 includes an accommodation part 713 and a plurality of communication parts 714, a baffle plate 72 is fastened in the accommodation part 713, and a baffle plate 72 is disposed between at least two adjacent communication parts 714.

In the example shown in FIG. 8, a baffle plate 72 is disposed between every two adjacent inlets 712. For example, a baffle plate 72 (a first baffle plate 721) is disposed between an inlet 712 in communication with the first arc spray vent 331 and an inlet 712 in communication with the second arc spray vent 332, and a baffle plate 72 (a second baffle plate 722) is disposed between the inlet 712 in communication with the second arc spray vent 332 and an inlet 712 in communication with the third arc spray vent 333. In some other examples, a baffle plate 72 may be disposed between only two adjacent inlets 712. For example, a baffle plate 72 is disposed between the inlet 712 in communication with the first arc spray vent 331 and the inlet 712 in communication with the second arc spray vent 332. However, no baffle plate 72 is disposed between the inlet 712 in communication with the second arc spray vent 332 and the inlet 712 in communication with the third arc spray vent 333.

By disposing the baffle plate 72, insulation performance of the housing 71 can be improved. This application provides a plurality of structures of the baffle plate 72. FIG. 8 shows an example of a structure of a baffle plate 72. The baffle plate 72 is fastened to the side wall of the housing 71 facing the circuit breaker 3, and a channel 725 exists between the baffle plate 72 and the side wall of the housing 71 away from the circuit breaker 3. Charged gas sprayed from the arc spray vent 33 on the side of the baffle plate 72 away from the outlet 711 flows through the channel 725 and then is discharged from the outlet 711. For example, after entering the housing 71, the gas sprayed from the second arc spray vent 332 flows through the channel 725 between the first baffle plate 721 and the housing 71 and is discharged from the outlet 711. The baffle plate 72 is fastened on the side wall of the housing 71 facing the circuit breaker 3, so that the baffle plate 72 is close to the arc spray vent 33, and two adjacent arc spray vents 33 can be physically isolated, thereby increasing a creepage distance between the two adjacent arc spray vents 33, and reducing a possibility of generating arcing or short-circuiting by charged gas from different arc spray vents 33 in the housing 71.

In the example shown in FIG. 8, each baffle plate 72 has a first surface 726 and a second surface 727, an arrangement direction of the first surface 726 and the second surface 727 is parallel to the arrangement direction of the plurality of arc spray vents 33, and the first surface 726 is closer to the outlet 711 than the second surface 727. For example, when the plurality of arc spray vents 33 are arranged in the height direction of the cabinet body 1, the first surface 726 is an upper surface of the baffle plate 72, and the second surface 727 is a lower surface of the baffle plate 72. The first surface 726 is inclined toward the outlet 711 in a direction from the circuit breaker 3 to the housing 71, so that the first surface 726 is disposed obliquely, and the first surface 726 can guide the gas sprayed from the arc spray vent 33. Under guidance by the first surface 726, the gas sprayed from the arc spray vent 33 on the side of the baffle plate 72 facing the outlet 711 can flow toward the outlet 711. For example, the gas sprayed from the first arc spray vent 331 can flow toward the outlet 711 under guidance by the first surface 726 of the first baffle plate 721, thereby reducing a possibility that the gas sprayed from the arc spray vent 33 flows back toward the side away from the outlet 711, and helping the gas in the housing 71 be discharged through the outlet 711.

In addition, in some examples, refer to FIG. 8. The second surface 727 may also be disposed obliquely toward the outlet 711 in a direction from the circuit breaker 3 to the housing 71. That is, the second surface 727 may also be disposed obliquely, and the second surface 727 guides the gas sprayed from the arc spray vent 33. Under guidance by the second surface 727, the gas sprayed from the arc spray vent 33 on the side of the baffle plate 72 away from the outlet 711 can flow along the second surface 727 toward the outlet 711. For example, the gas sprayed from the second arc spray vent 332 can flow toward the outlet 711 under guidance by the second surface 727 of the first baffle plate 721. In a process in which the gas sprayed from the arc spray vent 33 flows toward the outlet 711, the second surface 727 imposes small obstruction on the gas, helping the gas in the housing 71 flow toward the outlet 711.

In some other examples, the first surface 726 of the baffle plate 72 is disposed obliquely, but the second surface 727 of the baffle plate 72 is not oblique. Alternatively, neither the first surface 726 nor the second surface 727 of the baffle plate 72 is inclined. For example, an included angle between the first surface 726 of the baffle plate 72 and a surface of the housing 71 on which the baffle plate 72 is fastened is 90°, and an included angle between the second surface 727 of the baffle plate 72 and the surface of the housing 71 on which the baffle plate 72 is fastened is 90°.

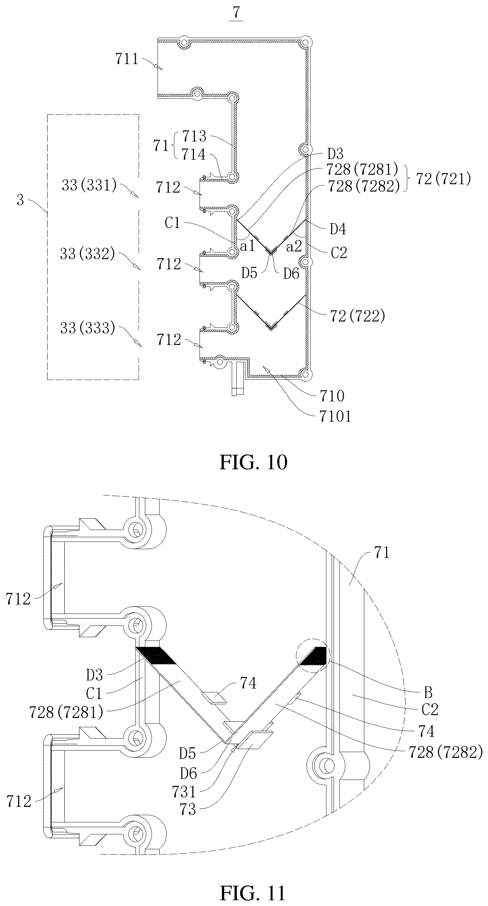

The baffle plate 72 may alternatively be of another suitable structure. For example, FIG. 10 shows an example of a structure of another baffle plate 72. Refer to FIG. 10. Each baffle plate 72 is configured to separate inlets 712 on two sides, and each baffle plate 72 includes at least one elastic inclined segment 728. For example, the baffle plate 72 in FIG. 10 includes two inclined segments 728, and the two inclined segments 728 are a first inclined segment 7281 and a second inclined segment 7282 respectively. An end portion of each inclined segment 728 facing the outlet 711 abuts against the housing 71. For example, an end portion (D3) of the first inclined segment 7281 facing the outlet 711 abuts against a side wall (C1) of the housing 71 facing the circuit breaker 3, and an end portion (D4) of the second inclined segment 7282 facing the outlet 711 abuts against a side wall (C2) of the housing 71 away from the circuit breaker 3. In addition, an end portion of each inclined segment 728 away from the outlet 711 is fastened to the housing 71. For example, both an end portion (D5) of the first inclined segment 7281 away from the outlet 711 and an end portion (D6) of the second inclined segment 7282 away from the outlet 711 are fastened to the housing 71. A dashed box in FIG. 10 represents the circuit breaker 3.

It may be understood that an end portion (for example, D3 and D4) of each inclined segment 728 facing the outlet 711 is not fastened to the housing 71. Because the inclined segment 728 is elastic, each inclined segment 728 is bent after being subjected to an external force. After the inclined segment 728 is bent when subject to the force, the end portion of the inclined segment 728 facing the outlet 711 no longer abuts against the housing 71. To be specific, when the inclined segment 728 is not bent, the baffle plate 72 is configured to separate inlets 712 on two sides. After the inclined segment 728 is bent when subject to a force, a gap is formed between the end portion of the inclined segment 728 facing the outlet 711 and the housing 71, and the inlets 712 on the two sides of the inclined segment 728 are in communication through the gap.

It should be noted that elasticity in this application means that an object can be restored to an original apparatus after being deformed when subject to a force. For example, the inclined segment 728 is bent when subject to a force, so that a gap is formed between the end portion of the inclined segment 728 facing the outlet 711 and the housing 71, and the inclined segment 728 is restored when not subject to a force, so that the end portion of the inclined segment 728 facing the outlet 711 abuts against the housing 71. To enable the inclined segment 728 to be elastic, the baffle plate 72 may be red fiberboard, or the baffle plate 72 may be made of another elastic material, or a part of the baffle plate 72 belonging to the inclined segment 728 is elastic (and is made of an elastic material), and a remaining part of the baffle plate 72 is not elastic.

Refer to FIG. 10. An included angle between a surface of the housing 71 used to abut against the inclined segment 728 and each inclined segment 728 is an acute angle. The included angle between the housing 71 and the inclined segment 728 is an included angle between two surfaces that are close to each other and that are of the housing 71 and the inclined segment 728. For example, an included angle between the surface of the housing 71 used to abut against the first inclined segment 7281 and the first inclined segment 7281 may be an included angle a1. For another example, an included angle between the surface of the housing 71 used to abut against the second inclined segment 7282 and the second inclined segment 7282 may be an included angle a2. Both the included angle a1 and the included angle a2 are acute angles (less than 90°).

The inclined segment 728 of the baffle plate 72 is disposed obliquely, the inclined segment 728 abuts against the housing 71, and the inclined segment 728 cannot be bent toward a side away from the outlet 711. In this way, the gas sprayed from the arc spray vent 33 on the side of the baffle plate 72 facing the outlet 711 is blocked by the baffle plate 72. For example, two inclined segments 728 of the first baffle plate 721 cannot be bent toward the side away from the outlet 711, so that the gas sprayed from the first arc spray vent 331 cannot bend the baffle plate 72 toward the side away from the outlet 711, thereby reducing a possibility that the gas sprayed from the first arc spray vent 331 flows back to the side away from the outlet 711, so that the gas sprayed from the first arc spray vent 331 can be quickly discharged from the outlet 711, and a possibility that arcing or short-circuiting is generated by charged gas sprayed from different arc spray vents 33 is reduced. The gas sprayed from the arc spray vent 33 located on the side of the baffle plate 72 away from the outlet 711 can apply an external force to the baffle plate 72 to bend the baffle plate 72. For example, the gas sprayed from the second arc spray vent 332 can push the first inclined segment 7281 and the second inclined segment 7282 of the first baffle plate 721 to be open, and the gas sprayed from the second arc spray vent 332 can flow toward the outlet 711 through a slit 75 between the inclined segment 728 (the inclined segment 728 pushed open) and the housing 71 and is discharged from the outlet 711.

The baffle plate 72 may be fastened to the housing 71 in any proper manner. For example, the collection apparatus 7 further includes a fastening base 73. FIG. 11 shows an example of a structure of a fastening base 73. Refer to FIG. 10 and FIG. 11. A fastening slot 731 is disposed in the fastening base 73, and both an end portion (D5) of the first inclined segment 7281 away from the outlet 711 and an end portion (D6) of the second inclined segment 7282 away from the outlet 711 are inserted into the fastening slot 731. Under a limitation by the fastening slot 731, both the end portion (D5) of the first inclined segment 7281 away from the outlet 711 and the end portion (D6) of the second inclined segment 7282 away from the outlet 711 are fastened to the housing 71 (cannot fall off from the housing 71). In some other examples, the end portion (D5) of the first inclined segment 7281 away from the outlet 711 and the end portion (D6) of the second inclined segment 7282 away from the outlet 711 may be welded or bonded to the housing 71, to implement a fastened connection to the housing 71.

In the example shown in FIG. 11, end portions that are of two inclined segments 728 of each baffle plate 72 and that are away from the outlet 711 are fastened to each other, that is, the end portion (D5) of the first inclined segment 7281 away from the outlet 711 and the end portion (D6) of the second inclined segment 7282 away from the outlet 711 are fastened to each other. For example, the baffle plate 72 may form the first inclined segment 7281 and the second inclined segment 7282 in a bending manner, the first inclined segment 7281 and the second inclined segment 7282 of the baffle plate 72 are fastened to each other, so that the baffle plate 72 forms a "V"-shaped structure, and the first inclined segment 7281 and the second inclined segment 7282 enclose to form a space that can accommodate impurities. Impurities that cannot be discharged through the outlet 711 in the housing 71 are precipitated on the baffle plate 72. In addition, the "V"-shaped baffle plate 72 helps guide the gas. The baffle plate 72 can guide the gas sprayed from the arc spray vent 33 to an end portion of the first inclined segment 7281 that abuts against the housing 71 and an end portion of the second inclined segment 7282 that abuts against the housing 71, and after the first inclined segment 7281 and the second inclined segment 7282 are bent toward the outlet 711 when subject to a force, the gas sprayed from the arc spray vent 33 flows toward the outlet 711.

In addition, refer to FIG. 10 and FIG. 11. Because a flow direction of the gas sprayed from the arc spray vent 33 after the gas just enters the housing 71 is approximately parallel to the arrangement direction of the housing 71 and the circuit breaker 3, the arrangement direction of the first inclined segment 7281 and the second inclined segment 7282 is parallel to the arrangement direction of the housing 71 and the circuit breaker 3, which is more helpful for the first inclined segment 7281 and the second inclined segment 7282 to bear a force. For example, the gas sprayed from the arc spray vent 33 directly impacts the first inclined segment 7281, so that the first inclined segment 7281 is more likely to bend toward the outlet 711. In addition, some gas accumulates between the second inclined segment 7282 and the housing 71, and then impacts the second inclined segment 7282 and enables the second inclined segment 7282 to bend toward the outlet 711.

In some examples, refer to FIG. 11. The collection apparatus 7 further includes a limiting block 74 fastened in the housing 71. The limiting block 74 is fastened on a side of the inclined segment 728 facing the outlet 711. For a position of the outlet 711, refer to FIG. 10. The limiting block 74 is configured to abut against the inclined segment 728. Using the first inclined segment 7281 in FIG. 11 as an example, the limiting block 74 is located between the end portion (D3) of the first inclined segment 7281 facing the outlet 711 and the end portion (D5) of the first inclined segment 7281 away from the outlet 711. When the inclined segment 728 (for example, the first inclined segment 7281) is bent toward the outlet 711 when subject to a force, the limiting block 74 can limit a bending degree of the inclined segment 728, thereby reducing a possibility that the inclined segment 728 is damaged or broken due to excessive bending. In some other examples, the limiting block 74 may alternatively not be disposed in the housing 71.

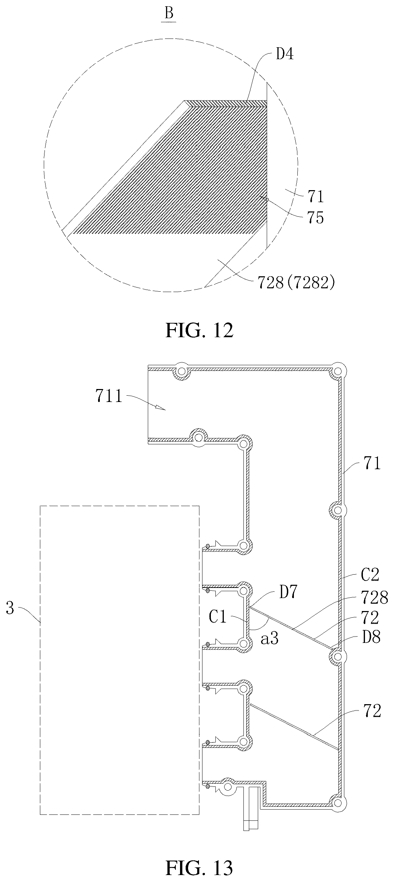

In some examples, each inclined segment 728 has a plurality of slits 75. FIG. 12 is an enlarged view at B in FIG. 11. Refer to FIG. 12. Each slit 75 runs through two sides of the inclined segment 728 in a thickness direction, and the plurality of slits 75 extend to an end portion of the inclined segment 728 that is used to abut against the housing 71. Using the second inclined segment 7282 in FIG. 12 as an example, the plurality of slits 75 extend to an end portion (D4) of the second inclined segment 7282 that is used to abut against the housing 71. A part of the inclined segment 728 provided with the slit 75 is more easily bent. Because the slit 75 extends to the end portion of the inclined segment 728 abutting against the housing 71, that is, a plurality of slits 75 extend to an end portion of the inclined segment 728 facing the outlet 711, under impact by gas sprayed from the arc spray vent 33 (refer to FIG. 10 for the structure of the arc spray vent 33), the end portion of the inclined segment 728 that is used to abut against the housing 71 is more easily separated from the housing 71. This helps the gas sprayed from the arc spray vent 33 flow toward the outlet 711 through the slit 75 between the inclined segment 728 (the bent inclined segment 728) and the housing 71.

When the inclined segment 728 has a plurality of slits 75, if the collection apparatus 7 further includes a limiting block 74, for example, in the example shown in FIG. 11, no slit 75 is disposed on a part of the inclined segment 728 abutting against the limiting block 74, that is, the plurality of slits 75 do not extend to a position of the inclined segment 728 used to abut against the limiting block 74.

In some other examples, the baffle plate 72 includes an inclined segment 728. FIG. 13 shows an example of a structure of still another baffle plate 72. Refer to FIG. 13. The baffle plate 72 is entirely inclined, and the baffle plate 72 may be understood as an inclined segment 728 as a whole. An end portion (D7) of the inclined segment 728 facing the outlet 711 abuts against a side wall (C1) of the housing 71 facing the circuit breaker 3. A dashed box in FIG. 13 represents the circuit breaker 3. An end portion (D8) of the inclined segment 728 away from the outlet 711 is fastened (for example, bonded or clamped) to a side wall (C2) of the housing 71 away from the circuit breaker 3. In addition, an included angle a3 between a surface of the housing 71 used to abut against the inclined segment 728 and the inclined segment 728 is an acute angle.

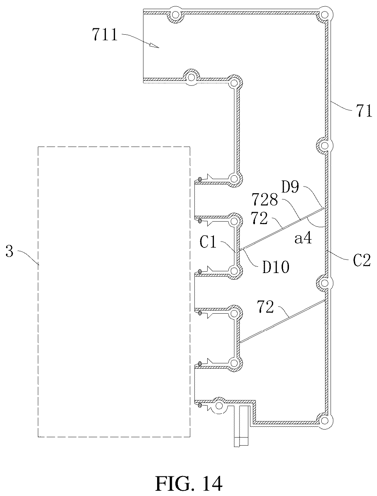

When the baffle plate 72 includes an inclined segment 728, FIG. 14 shows an example of a structure of still another baffle plate 72. Refer to FIG. 14. The baffle plate 72 is entirely inclined, and the baffle plate 72 may be understood as an inclined segment 728 as a whole. An end portion (D9) of the inclined segment 728 facing the outlet 711 abuts against a side wall (C2) of the housing 71 away from the circuit breaker 3. A dashed box in FIG. 14 represents the circuit breaker 3. An end portion (D10) of the inclined segment 728 away from the outlet 711 is fastened (for example, bonded or clamped) to a side wall (C1) of the housing 71 facing the circuit breaker 3. In addition, an included angle a4 between a surface of the housing 71 used to abut against the inclined segment 728 and the inclined segment 728 is an acute angle.

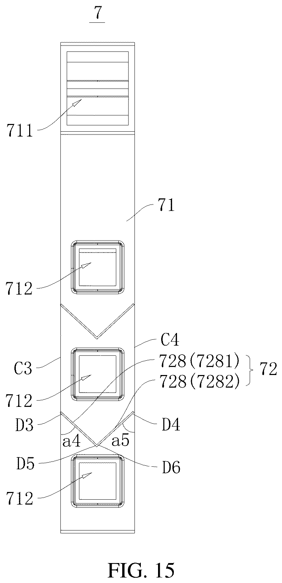

FIG. 15 shows an example of a structure of still another baffle plate 72. In the example shown in FIG. 15, the baffle plate 72 also includes two inclined segments 728 (a first inclined segment 7281 and a second inclined segment 7282). However, different from the example shown in FIG. 10, an arrangement direction of the first inclined segment 7281 and the second inclined segment 7282 in FIG. 15 is perpendicular to the arrangement direction of the circuit breaker 3 and the housing 71, for example, the first inclined segment 7281 and the second inclined segment 7282 are arranged in the width direction of the cabinet body 1 (for the cabinet body 1, refer to FIG. 1). In this example, an end portion (D3) of the first inclined segment 7281 facing the outlet 711 abuts against a side wall (C3) of the housing 71, and an end portion (D4) of the second inclined segment 7282 facing the outlet 711 abuts against another side wall (C4) of the housing 71. In addition, both an end portion (D5) of the first inclined segment 7281 away from the outlet 711 and an end portion (D6) of the second inclined segment 7282 away from the outlet 711 are fastened to the housing 71. In addition, an included angle a4 between a surface of the housing 71 used to abut against the first inclined segment 7281 and the first inclined segment 7281 is an acute angle, and an included angle a5 between a surface of the housing 71 used to abut against the second inclined segment 7282 and the second inclined segment 7282 is also an acute angle.

The foregoing describes some structures of the baffle plate 72 in this application. However, a shape of the baffle plate 72 is not limited to a shape presented in the accompanying drawings of this application, and the baffle plate 72 having a structure similar to the structure of the baffle plate 72 in this application or a structure that can implement a function of the baffle plate 72 in this application may be used.

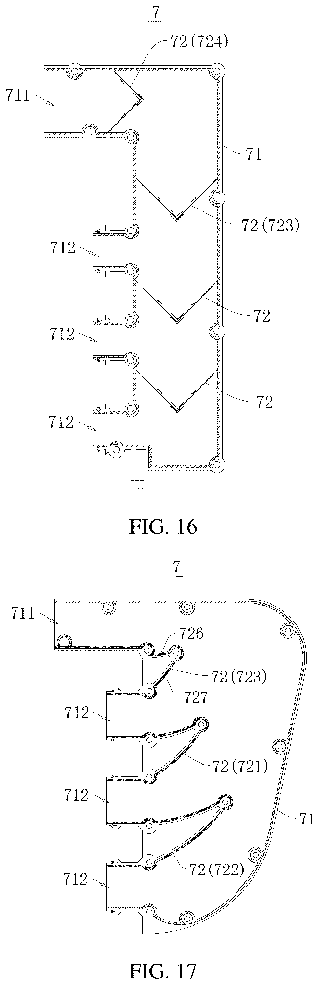

In addition, in some examples, a baffle plate 72 may also be disposed between the outlet 711 and an adjacent inlet 712. For example, FIG. 16 shows an example of a structure of another collection apparatus 7. Refer to FIG. 16. Two baffle plates 72 (a third baffle plate 723 and a fourth baffle plate 724) are disposed between the outlet 711 and the adjacent inlet 712. A structure of the baffle plate 72 in FIG. 16 is similar to a structure of the baffle plate 72 in FIG. 10, and details are not described herein again. The baffle plates 72 (the third baffle plate 723 and the fourth baffle plate 724) located between the outlet 711 and the adjacent inlet 712 can block, to some extent, impurities flowing back to the housing 71 from the outside, thereby reducing a possibility that the external impurities are deposited at the bottom of the housing 71 after entering the housing 71. In addition, FIG. 17 shows an example of a structure of still another collection apparatus 7. Refer to FIG. 17. A baffle plate 72 (a third baffle plate 723) is disposed between an outlet 711 and an adjacent inlet 712. A structure of the baffle plate 72 in FIG. 16 is similar to the structure of the baffle plate 72 in FIG. 8. For example, both a first surface 726 and a second surface 727 of the baffle plate 72 are disposed obliquely. Details are not described herein again.

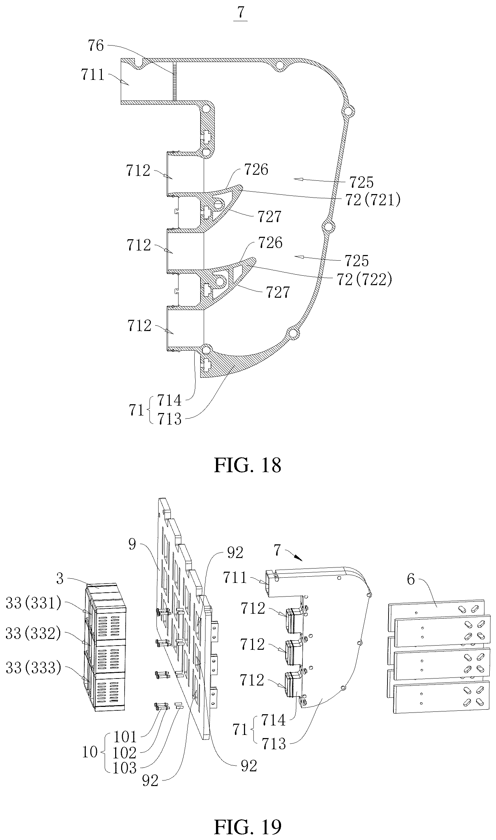

In some examples, the collection apparatus 7 may further include a filter apparatus disposed at the outlet 711. For example, FIG. 18 shows an example of a structure of still another collection apparatus 7. The collection apparatus 7 further includes a filter screen 76 (a mesh filter apparatus). The filter screen 76 is fastened in the housing 71, and the filter screen 76 is disposed between the outlet 711 and an adjacent inlet 712 (an inlet 712 adjacent to the outlet 711). The filter screen 76 does not affect discharge of gas in the housing 71 from the outlet 711. However, the filter screen 76 can block impurities flowing back to the housing 71 from the outside, thereby reducing a possibility that the external impurities enter the housing 71. In the example shown in FIG. 18, if the filter screen 76 is disposed in the housing 71, no baffle plate 72 may be disposed between the outlet 711 and the adjacent inlet 712. In some other examples, both the baffle plate 72 and the filter screen 76 are disposed between the outlet 711 and the adjacent inlet 712.

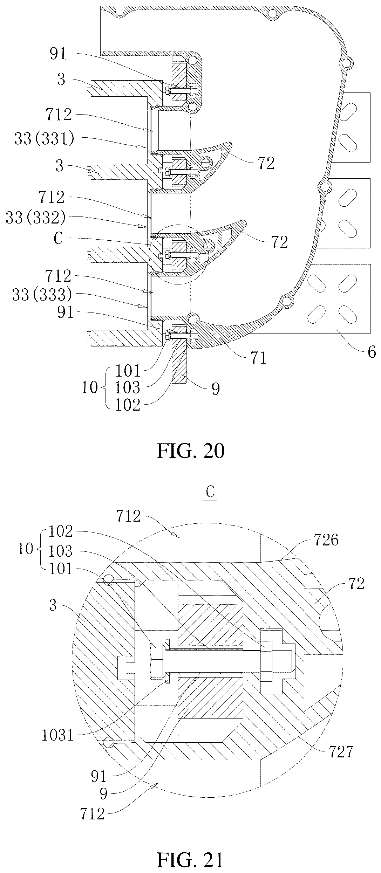

In this application, the collection apparatus 7 may be fastened in the cabinet body 1 in any proper manner. For example, the power cabinet 100 further includes a mounting plate 9 fastened in the cabinet body 1. FIG. 19 shows an example of a structure of a mounting plate 9. A plurality of arc spray vents 33 face the mounting plate 9. The mounting plate 9 is used for fastening the collection apparatus 7. The housing 71 is fastened to the mounting plate 9. For example, the housing 71 is fastened to the mounting plate 9 by using a mounting assembly 10. FIG. 20 shows an example of a structure of a mounting assembly 10. Refer to FIG. 19 and FIG. 20. The mounting assembly 10 includes a bolt 101, and the bolt 101 passes through the mounting plate 9 and is connected to the housing 71. In the example shown in FIG. 20, the mounting assembly 10 further includes a nut 102 disposed in the housing 71, and the bolt 101 is connected to the housing 71 through a threaded connection to the nut 102 in the housing 71. In some other examples, the mounting assembly 10 does not include the nut 102, a threaded hole is disposed on the housing 71, and the bolt 101 passes through the mounting plate 9 and is threaded to the threaded hole on the housing 71.

Refer to FIG. 19 and FIG. 20. A part of the housing 71 is located on a side of the mounting plate 9 away from the circuit breaker 3, the other part of the housing 71 passes through the mounting plate 9 and extends to a side of the mounting plate 9 facing the circuit breaker 3, and a plurality of inlets 712 are located on the side of the mounting plate 9 facing the circuit breaker 3 and are respectively in communication with corresponding arc spray vents 33. For example, when the housing 71 includes an accommodation part 713 and a communication part 714, the accommodation part 713 is located on a side of the mounting plate 9 away from the circuit breaker 3, the mounting plate 9 has a plurality of through holes 92, each housing 71 passes through a plurality of through holes 92, and a quantity of through holes 92 that each housing 71 passes through is the same as a quantity of communication parts 714, each communication part 714 in each housing 71 passes through corresponding through holes 92 on the mounting plate 9 and extends to a side of the mounting plate 9 facing the circuit breaker 3, so that the inlet 712 on the communication part 714 is in communication with the corresponding arc spray vent 33 on the circuit breaker 3.

In a process of mounting the collection apparatus 7, the housing 71 is first enabled to pass through the mounting plate 9, and the inlet 712 of the housing 71 is enabled to extend to the side of the mounting plate 9 facing the circuit breaker 3, so that the inlet 712 of the housing 71 is in communication with the arc spray vent 33 of the circuit breaker 3. Then, the housing 71 is fastened on the mounting plate 9, and the position of the housing 71 is limited by using the mounting plate 9, thereby reducing a possibility that the housing 71 becomes loose. In addition, when the circuit breaker 3 is mounted in the cabinet body 1 in a plug-in manner, in a process of inserting the circuit breaker 3, the arc spray vent 33 of the circuit breaker 3 is in communication with the inlet 712 of the housing 71. Under a limiting effect of the mounting plate 9, a possibility of the housing 71 shaking randomly is low, which facilitates communication between the inlet 712 of the housing 71 and the corresponding arc spray vent 33.

In addition, when the power cabinet 100 includes the mounting plate 9, the mounting plate 9 may also play a role of fastening the busbar 6. Refer to FIG. 19 and FIG. 20. The busbar 6 passes through the mounting plate 9 and is connected to the circuit breaker 3 (for example, inserted into the socket 32 of the circuit breaker 3), and the busbar 6 is fastened to the mounting plate 9. For example, the busbar 6 is fastened to the mounting plate 9 by using a screw. That is, in a process of mounting the busbar 6, the busbar 6 is first enabled to pass through the mounting plate 9, and then the busbar 6 is fastened on the mounting plate 9, so as to fasten the busbar 6, thereby reducing a possibility that the busbar 6 becomes loose. In addition, when the circuit breaker 3 is mounted in the cabinet body 1 in a plug-in manner, in a process of inserting the circuit breaker 3, the busbar 6 is fastened on the mounting plate 9, and the busbar 6 is limited by using the mounting plate 9. The busbar 6 is not likely to be misaligned with a corresponding socket 32 of the circuit breaker 3, thereby reducing a possibility of bending or damaging the busbar 6 in a process of mounting the circuit breaker 3, and facilitating quick mounting of the circuit breaker 3.

Because a size error exists in the circuit breaker 3, the mounting plate 9, or the housing 71, the housing 71 may not be fully adapted to the mounting plate 9 during mounting. Therefore, in some examples, refer to FIG. 21. FIG. 21 is an enlarged view at C in FIG. 20. The mounting assembly 10 further includes a sleeve 103, and the housing 71 can move relative to the mounting plate 9 by disposing the sleeve 103. The mounting plate 9 has a first mounting hole 91, the sleeve 103 passes through the first mounting hole 91, the bolt 101 passes through the sleeve 103 and is connected to the housing 71, one end of the sleeve 103 facing the circuit breaker 3 abuts against a head of the bolt 101, and one end of the sleeve 103 away from the circuit breaker 3 abuts against the housing 71. That is, after the bolt 101 is tightened, the sleeve 103 is clamped between the head of the bolt 101 and the housing 71, so that the housing 71 can carry the sleeve 103 and the bolt 101 to move.

In addition, a hole diameter of the first mounting hole 91 can prevent the head of the bolt 101 from passing through the first mounting hole 91. For example, the hole diameter of the first mounting hole 91 is less than a size of the head of the bolt 101. In a process in which the bolt 101 moves toward a side away from the circuit breaker 3, the head of the bolt 101 abuts against the mounting plate 9, so that the head of the bolt 101 cannot pass through the first mounting hole 91. For another example, one end of the sleeve 103 facing the circuit breaker 3 has a flange 1031, and a diameter of the flange 1031 is greater than the hole diameter of the first mounting hole 91. In a process in which the bolt 101 and the flange 1031 move toward a side away from the circuit breaker 3, the flange 1031 of the sleeve 103 abuts against the mounting plate 9, so that the head of the bolt 101 cannot pass through the first mounting hole 91. The foregoing two design manners both belong to "the hole diameter of the first mounting hole 91 can prevent the head of the bolt 101 from passing through the first mounting hole 91" described in this application.

Refer to FIG. 21. A length of the sleeve 103 is greater than a thickness of the mounting plate 9. The length of the sleeve 103 means a length of the sleeve 103 in the arrangement direction of the circuit breaker 3 and the mounting plate 9 (for example, an axial direction of the bolt 101), and the thickness of the mounting plate 9 means a thickness of the mounting plate 9 in the arrangement direction of the circuit breaker 3 and the mounting plate 9 (for example, the axial direction of the bolt 101). Because the sleeve 103 is relatively long, the sleeve 103 and the bolt 101 can move in the axial direction of the bolt 101 with the housing 71, and absorb a size error in this direction. In addition, a gap exists between the surface of the mounting plate 9 that encloses to form the first mounting hole 91 and the outer circumferential surface of the sleeve 103 for the sleeve 103 to move, so that the sleeve 103 and the bolt 101 can also move in the radial direction of the bolt 101 with the housing 71.

By disposing the sleeve 103, the housing 71 can move in the axial direction of the bolt 101 and the radial direction of the bolt 101 without affecting the connection between the housing 71 and the mounting plate 9, and when a size error exists in the circuit breaker 3, the mounting plate 9, or the housing 71, mounting of the housing 71 is facilitated.

In some other examples, the length of the sleeve 103 is greater than the thickness of the mounting plate 9, and the sleeve 103 can move in the axial direction of the bolt 101. However, the surface of the mounting plate 9 that encloses to form the first mounting hole 91 is attached to or in contact with the outer circumferential surface of the sleeve 103, and the sleeve 103 cannot move in the radial direction of the bolt 101. In some other examples, a gap exists between the surface of the mounting plate 9 that encloses to form the first mounting hole 91 and the outer circumferential surface of the sleeve 103 for the sleeve 103 to move, and the sleeve 103 can move in the radial direction of the bolt 101. However, the length of the sleeve 103 does not allow the sleeve 103 to move in the axial direction of the bolt 101.

It should be noted that the bolt 101 in this application is not a bolt of a specific type, but is any bolt having a head (including but not limited to a hexagonal type and a round type) and a rod part (a threaded rod).

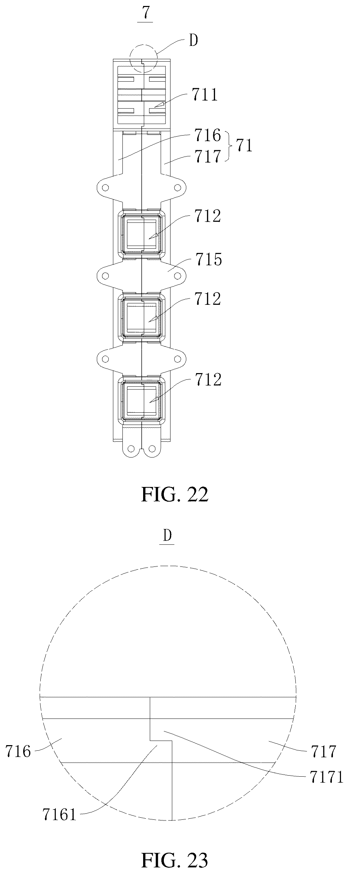

In the example shown in FIG. 21, the mounting assembly 10 is located between two adjacent inlets 712, and the nut 102 is located between the first surface 726 and the second surface 727 of the baffle plate 72. In a design manner shown in FIG. 21, a volume of the housing 71 can be reduced, so that the housing 71 is not additionally provided with a structure for connecting to the mounting assembly 10. In some other examples, to facilitate mounting of the housing 71, the housing 71 has a protruding plate 715 configured to be fastened to the mounting plate 9. For example, FIG. 22 shows an example of a structure of a protruding plate 715. When the housing 71 is fastened to the mounting plate 9 by using a bolt 101 or a screw, the bolt 101 or the screw may run through the protruding plate 715, so that a connection position of the bolt 101 or the screw is located on an outer side of the housing 71, facilitating fastening between the housing 71 and the mounting plate 9.

In some examples, the housing 71 may be split into two parts. For example, the housing 71 in FIG. 22 is used as an example. The housing 71 includes a first part 716 and a second part 717. It may be understood that the first part 716 and the second part 717 are each a half of the housing 71. After the first part 716 and the second part 717 are connected through snap-fit, they can be spliced into a complete housing 71. This design manner facilitates production of the housing 71 and mounting of an internal structure (for example, the baffle plate 72) of the housing 71.

FIG. 23 is an enlarged view at D in FIG. 22. Refer to FIG. 23. The first part 716 is configured to form a first stepped structure 7161 at a connection position with the second part 717, and the second part 717 is configured to form a second stepped structure 7171 at the connection position with the first part 716. The first stepped structure 7161 and the second stepped structure 7171 can be spliced to each other to play a sealing function, thereby reducing a possibility that gas in the housing 71 leaks from a splicing position between the first part 716 and the second part 717.

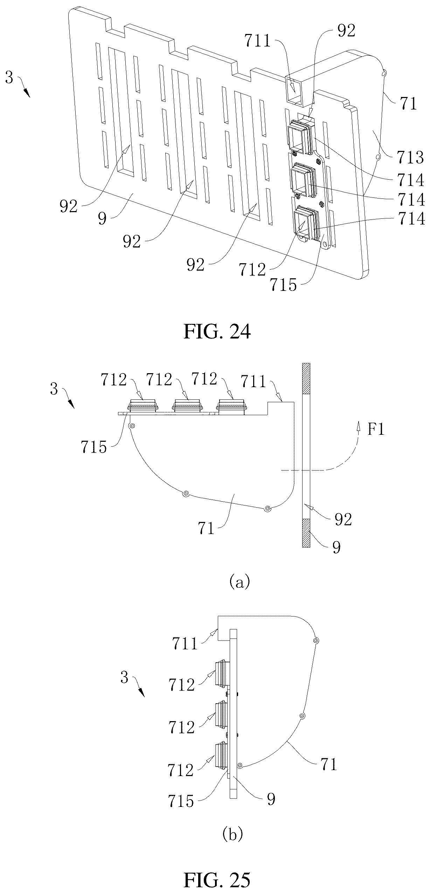

In embodiments shown in FIG. 19 and FIG. 20, each housing 71 passes through a plurality of through holes 92. For example, a quantity of through holes 92 that each housing 71 passes through is the same as a quantity of communication parts 714, and each communication part 714 passes through a corresponding through hole 92 on the mounting plate 9 and extends to a side of the mounting plate 9 facing the circuit breaker 3. In another embodiment, FIG. 24 shows an example of a structure of a through hole 92. Each housing 71 has a part that passes through the through hole 92 and extends to the side of the mounting plate 9 facing the circuit breaker 3 (an arrow 3 in FIG. 24 represents a position of the circuit breaker 3), so that the inlet 712 is located on the side of the mounting plate 9 facing the circuit breaker 3. For example, when the housing 71 includes an accommodation part 713 and a plurality of communication parts 714, the accommodation part 713 is located on a side of the mounting plate 9 away from the circuit breaker 3, and the plurality of communication parts 714 on each housing 71 pass through a same through hole 92 on the mounting plate 9 and extend to the side of the mounting plate 9 facing the circuit breaker 3.

A complete through hole 92 is disposed on the mounting plate 9 for the corresponding housing 71 to pass through, so that a size of the through hole 92 is relatively large. The size of the through hole 92 is designed based on a requirement. In a process of mounting the housing 71, the housing 71 may be enabled to pass through the through hole 92 from the side of the mounting plate 9 facing the circuit breaker 3, to complete mounting of the housing 71. For example, the side of the mounting plate 9 facing the circuit breaker 3 is a front of the cabinet body 1, and a person may complete mounting of the collection apparatus 7 by standing in front of the cabinet body 1.

FIG. 25 shows an example of a process of mounting a housing 71. In the process of mounting the housing 71, refer to (a) in FIG. 25. The housing 71 is first located on the side of the mounting plate 9 facing the circuit breaker 3. An arrow 3 in FIG. 25 indicates a position of the circuit breaker 3 after being mounted. It can be understood that, when the housing 71 is mounted in this manner, the circuit breaker 3 is mounted only after the housing 71 is mounted. After the housing 71 is located on the side of the mounting plate 9 facing the circuit breaker 3, a posture of the housing 71 is adjusted, so that the posture of the housing 71 is shown in (a) in FIG. 25. Further, the housing 71 is aligned with the through hole 92, the housing 71 is first pushed into the through hole 92 step by step in a direction indicated by a dashed arrow F1, to pass through the through hole 92 step by step. Then the housing 71 is rotated, so that the housing 71 finally has a gesture shown in (b) in FIG. 25.

In another embodiment, a size of the through hole 92 is large enough, so that the housing 71 can directly pass through the mounting plate 9 through the through hole 92 without changing the posture to complete mounting.

In addition, when the housing 71 has a protruding plate 715, return to FIG. 24. FIG. 24 further shows a structure of another protruding plate 715. After the housing 71 is mounted, the protruding plate 715 is located on the side of the mounting plate 9 facing the circuit breaker 3, and the protruding plate 715 is configured to be fastened to the mounting plate 9.

In a process of mounting the housing 71, if the housing 71 passes through the through hole 92 from the side of the mounting plate 9 facing the circuit breaker 3 and mounting of the housing 71 is completed, for example, in a mounting manner of the housing 71 shown in FIG. 25, the protruding plate 715 of the housing 71 does not pass through the through hole 92, but is located on the side of the mounting plate 9 facing the circuit breaker 3. It is convenient for a person to stand on the side of the mounting plate 9 facing the circuit breaker 3 to fasten the protruding plate 715 and the mounting plate 9. By fastening the protruding plate 715 of the housing 71 and the mounting plate 9, mounting of the housing 71 can be completed.

It may be understood that the protruding plate 715 is a plate-shaped protrusion on the housing 71. FIG. 22 and FIG. 24 show two different protruding plates 715. In some other embodiments, the protruding plate 715 may alternatively be of another suitable plate-shaped structure, and one or more protruding plates 715 may be disposed.

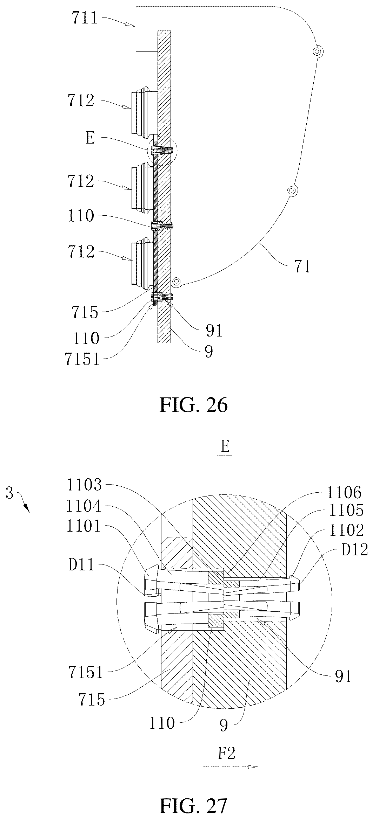

When the housing 71 has the protruding plate 715, in an embodiment, the protruding plate 715 may be fastened to the mounting plate 9 by using a bolt 101 and a nut 102 (for example, the case shown in FIG. 21). In another embodiment, the power cabinet 100 further includes a fastener 110. FIG. 26 shows an example of a structure of a fastener 110. The protruding plate 715 and the mounting plate 9 can also be connected by using the fastener 110.

FIG. 27 is an enlarged view at E in FIG. 26. Refer to FIG. 27. The mounting plate 9 has a first mounting hole 91, the protruding plate 715 has a second mounting hole 7151, and the fastener 110 passes through the first mounting hole 91 and the second mounting hole 7151. At least a part of the fastener 110 is elastic, so that the fastener 110 can move in a radial direction of the first mounting hole 91 at two ends (an end D11 and an end D12) in an axial direction of the first mounting hole 91. One end (D11) of the two ends of the fastener 110 is provided with a first protrusion 1101, and the first protrusion 1101 is located on a side of the protruding plate 715 away from the mounting plate 9 and is configured to abut against the protruding plate 715. The other end (D12) of the two ends of the fastener 110 is provided with a second protrusion 1102, and the second protrusion 1102 is located on a side of the mounting plate 9 away from the protruding plate 715 and is configured to abut against the mounting plate 9.

The fastener 110 may be inserted from a side of the second mounting hole 7151 away from the first mounting hole 91, that is, the fastener 110 is inserted in a direction indicated by an arrow F2, so that one end (D12) of the fastener 110 having the second protrusion 1102 moves in the radial direction of the first mounting hole 91. Therefore, the second protrusion 1102 can be inserted into the second mounting hole 7151, and sequentially passes through the second mounting hole 7151 and the first mounting hole 91. Finally, the second protrusion 1102 is located on the side of the mounting plate 9 away from the protruding plate 715. Because the second protrusion 1102 is no longer limited by the first mounting hole 91 and the second mounting hole 7151, a position of the second protrusion 1102 is restored (the second protrusion 1102 moves in a reverse direction of the radial direction of the first mounting hole 91). In this case, the mounting plate 9 and the protruding plate 715 are located between the first protrusion 1101 and the second protrusion 1102. If the fastener 110 is continuously pushed in a direction (direction F2) from the protruding plate 715 to the mounting plate 9, the first protrusion 1101 abuts against the protruding plate 715. If the fastener 110 is pulled out in a direction (reverse direction of the direction F2) from the mounting plate 9 to the protruding plate 715, the second protrusion 1102 abuts against the mounting plate 9.

In addition, the fastener 110 may alternatively be inserted from a side of the first mounting hole 91 away from the second mounting hole 7151, that is, the fastener 110 is inserted in a reverse direction of the direction indicated by the arrow F2.

If the fastener 110 needs to be pulled out, the fastener 110 can be pulled out by enabling only one end of the fastener 110 to move in the radial direction of the first mounting hole 91. For example, the fastener 110 is pulled out from the side of the second mounting hole 7151 away from the first mounting hole 91, that is, the fastener 110 is pulled out in the reverse direction of the direction indicated by the arrow F2, so that the end (D12) of the fastener 110 having the second protrusion 1102 moves in the radial direction of the first mounting hole 91, the second protrusion 1102 can be inserted into the first mounting hole 91 and sequentially passes through the first mounting hole 91 and the second mounting hole 7151, and finally the fastener 110 is pulled out.

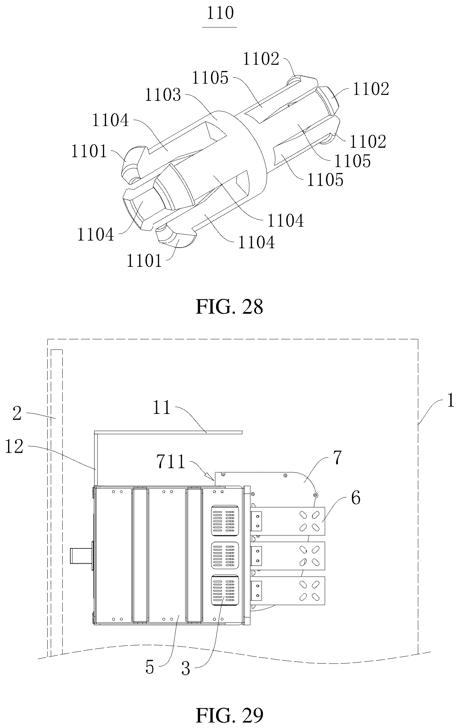

The fastener 110 may be of any suitable structure. For example, the fastener 110 includes a fastening block 1103, a plurality of first movable bars 1104, and a plurality of second movable bars 1105. FIG. 28 shows an example of a structure of a fastening block 1103. Refer to FIG. 28. The fastening block 1103 is of a block structure, for example, a disk or a stepped shaft. The fastening block 1103 is located in the first mounting hole 91 or in the second mounting hole 7151. For example, in the embodiment shown in FIG. 27, a part of the fastening block 1103 is located in the first mounting hole 91, and the other part thereof is located in the second mounting hole 7151. The plurality of first movable bars 1104 and the plurality of second movable bars 1105 are located on different sides of the fastening block 1103 in the axial direction of the first mounting hole 91. For example, in the embodiment shown in FIG. 27, the plurality of first movable bars 1104 are located on a side of the fastening block 1103 facing the circuit breaker 3, and the plurality of second movable bars 1105 are located on a side of the fastening block 1103 away from the circuit breaker 3. An arrow 3 in FIG. 27 represents the position of the circuit breaker 3.

Refer to FIG. 27 and FIG. 28. The plurality of first movable bars 1104 are arranged in a circumferential direction of the first mounting hole 91, and the plurality of second movable bars 1105 are also arranged in the circumferential direction of the first mounting hole 91. One end (D11) of the two ends of the fastener 110 includes one end of each of the plurality of first movable bars 1104 away from the fastening block 1103, and the other end (D12) of the two ends of the fastener 110 includes one end of each of the plurality of second movable bars 1105 away from the fastening block 1103. One end of each first movable bar 1104 away from the fastening block 1103 has a first protrusion 1101, and a plurality of first protrusions 1101 are located on a side of the protruding plate 715 away from the mounting plate 9 and are configured to abut against the protruding plate 715. One end of each second movable bar 1105 away from the fastening block 1103 has a second protrusion 1102, and a plurality of second protrusions 1102 are located on a side of the mounting plate 9 away from the protruding plate 715 and are configured to abut against the mounting plate 9.

In another embodiment, one end of only one or each of only some of the first movable bars 1104 away from the fastening block 1103 has a first protrusion 1101, and one end of only one or each of only some of the second movable bars 1105 away from the fastening block 1103 has a second protrusion 1102.

The plurality of first movable bars 1104 and the plurality of second movable bars 1105 are elastic, so that the fastener 110 can move in the radial direction of the first mounting hole 91 at two ends (the end D11 and the end D12) in the axial direction of the first mounting hole 91.

Because a size error exists in the housing 71, the mounting plate 9, or the circuit breaker 3, the housing 71 may not be fully adapted to the mounting plate 9 in a mounting process. Therefore, if the fastener 110 is used to connect the mounting plate 9 and the protruding plate 715, in an embodiment, a gap exists between a part of the fastener 110 that is located in the first mounting hole 91 and an inner wall surface of the first mounting hole 91. In other words, the part of the fastener 110 that is located in the first mounting hole 91 is incompletely in contact with or is completely not in contact with the inner wall surface of the first mounting hole 91. In addition, a gap exists between a part of the fastener 110 that is located in the second mounting hole 7151 and an inner wall surface of the second mounting hole 7151. In other words, the part of the fastener 110 that is located in the second mounting hole 7151 is incompletely in contact with or is completely not in contact with the inner wall surface of the second mounting hole 7151. In this design manner, the housing 71 can move relative to the mounting plate 9, a size error exists in the housing 71, the mounting plate 9, or the circuit breaker 3, and the inlet 712 of the housing 71 can also be in communication with the arc spray vent 33 on the circuit breaker 3.

In an embodiment, the first mounting hole 91 is a stepped hole. For example, refer to FIG. 27. To adapt to the first mounting hole 91, the fastener 110 has a stepped surface 1106, and the stepped surface 1106 is located on the fastening block 1103. In another embodiment, the second mounting hole 7151 is a stepped hole, and the fastener 110 has a stepped surface 1106 that matches the stepped hole.

In some other examples, the mounting plate 9 may not be disposed, and the collection apparatus 7 may be fastened to the cabinet body 1 by using a support or a steel angle.

In this application, a position of the outlet 711 may be set based on a requirement, so that the gas sprayed from the arc spray vent 33 can be discharged to a position that imposes small impact on the busbar 6 and another component in the cabinet body 1 under guidance by the housing 71. For example, FIG. 29 shows an example of a position of an outlet 711. Refer to FIG. 29. A plurality of arc spray vents 33 are arranged in the height direction of the cabinet body 1 (for the structure of the arc spray vent 33, refer to FIG. 20), and the outlet 711 is located above the circuit breaker 3 and faces the cabinet door 2. When the circuit breaker 3 is mounted in the mounting base 5, the outlet 711 is located above the mounting base 5. The outlet 711 of the housing 71 is located above the circuit breaker 3 and faces the cabinet door 2, that is, the outlet 711 is away from the busbar 6, and the gas in the housing 71 is discharged to a position far away from the busbar 6 through the outlet 711, thereby reducing a possibility that the gas sprayed by the circuit breaker 3 is attached to the busbar 6, reducing a risk that the busbar 6 is scorched or blackened, and further reducing impact of impurities discharged from the outlet 711 on another component in the cabinet body 1, so that the power cabinet 100 operates more stably.

In addition, there may be some other structures above the circuit breaker 3. For example, there may be some metal bars (different from the busbar 6, where the busbar 6 in this application specially means the busbar 6 the arc spray vent 33 faces) above the circuit breaker 3. To minimize impact caused by the outlet 711 on a peripheral structure, gas in the housing 71 may be further discharged to an independent space through the outlet 711. For example, refer to FIG. 29. The power cabinet 100 further includes a first protection plate 11 and a second protection plate 12. The first protection plate 11 is located above the circuit breaker 3. The first protection plate 11 is farther away from the circuit breaker 3 than the outlet 711. The second protection plate 12 is located on a side of the outlet 711 facing the cabinet door 2. A space enclosed by the first protection plate 11, the second protection plate 12, and the circuit breaker 3 is in communication with the outlet 711. When the circuit breaker 3 is mounted in the mounting base 5, a space enclosed by the first protection plate 11, the second protection plate 12, and the mounting base 5 is in communication with the outlet 711. The first protection plate 11 can protect another structure and component above the circuit breaker 3, thereby reducing a possibility that gas discharged from the outlet 711 affects another structure and component above the circuit breaker 3. In addition, the second protection plate 12 blocks and shields the gas discharged from the outlet 711, so that the gas in the housing 71 is discharged to a relatively independent space in the cabinet body 1 through the outlet 711. In this way, a possibility that the gas discharged from the housing 71 affects another component around the outlet 711 can be reduced.

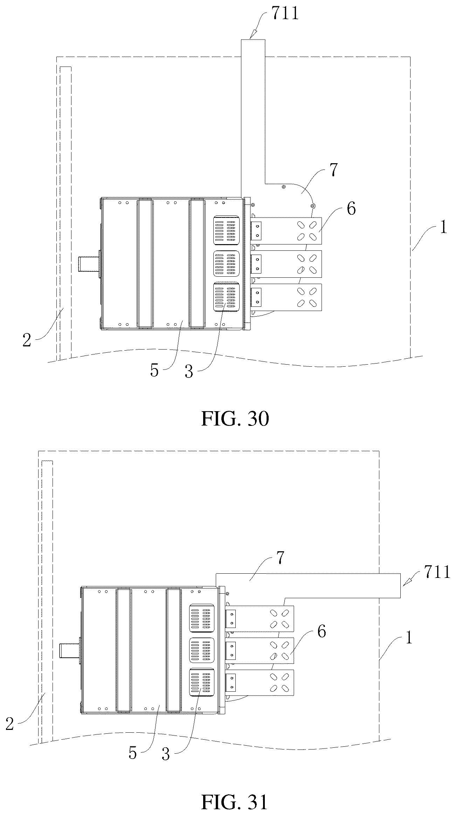

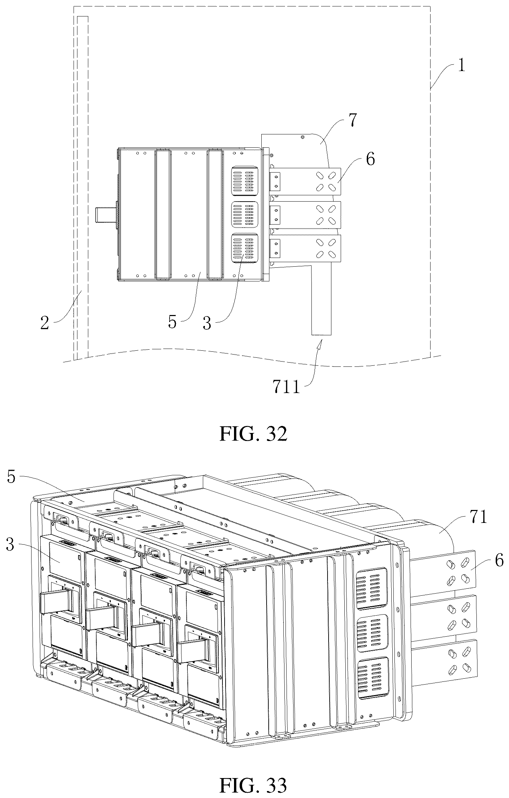

In some other examples, the outlet 711 of the housing 71 may be located outside the cabinet body 1. For example, FIG. 30 shows an example of a position of another outlet 711. In this example, a part of the housing 71 extends out of the cabinet body 1, and the outlet 711 is disposed on a part of the housing 71 extending out of the cabinet body 1, so that the outlet 711 is located above the cabinet body 1. For another example, FIG. 31 shows an example of a position of still another outlet 711. In this example, a part of the housing 71 extends to the rear of the cabinet body 1, so that the outlet 711 is located on a side of the cabinet body 1 away from the cabinet door 2. For another example, FIG. 32 shows an example of a position of still another outlet 711. In this example, the outlet 711 is located in the cabinet body 1, and the outlet 711 is located below a plurality of inlets 712. In other words, gas in the housing 71 is discharged from a lower part of the housing 71.

In another embodiment, the housing 71 includes a body and an extension tube. All inlets 712 of the housing 71 are located on the body, and the outlet 711 of the housing 71 is located on the extension tube. The extension tube may extend to any position in the cabinet body 1 that can discharge gas based on a requirement, or the extension tube extends to the outside of the cabinet body 1 and discharges gas to the outside of the cabinet body 1.

In addition, this application further provides a power cabinet 100. The power cabinet 100 includes a cabinet body 1, a circuit breaker 3, and a busbar 6. For structures of the cabinet body 1, the circuit breaker 3, and the busbar 6, refer to FIG. 1 to FIG. 4. Details are not described herein again. Refer to FIG. 4. Both the circuit breaker 3 and the busbar 6 are fastened in the cabinet body 1, and the circuit breaker 3 is connected to the busbar 6 (for example, the busbar 6 is inserted into a corresponding socket 32 of the circuit breaker 3). The circuit breaker 3 has a plurality of arc spray vents 33 facing the busbar 6. In the power cabinet 100, the plurality of arc spray vents 33 are arranged in a height direction of the cabinet body 1 (for the cabinet body 1, refer to FIG. 1).

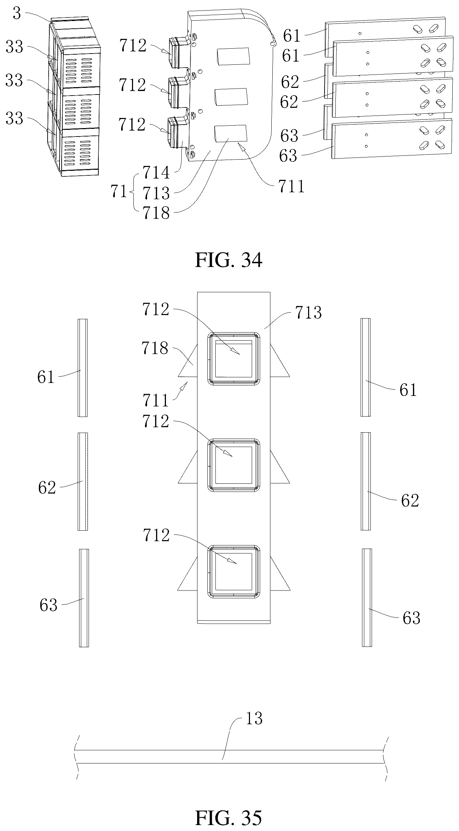

The power cabinet 100 further includes a housing 71 fastened in the cabinet body 1. FIG. 33 shows an example of a structure of a housing 71. Refer to FIG. 33. The housing 71 is located on a side of the circuit breaker 3 facing the busbar 6, and the housing 71 and the busbar 6 are arranged in the width direction of the cabinet body 1 (for the cabinet body 1, refer to FIG. 1). For example, FIG. 34 shows an example of a split structure of a circuit breaker 3, a housing 71, and a busbar 6. A plurality of busbars 6 include two first busbars 61, the housing 71 is located between the two first busbars 61, and the housing 71 and one of the first busbars 61 are arranged in the width direction of the cabinet body 1.

Refer to FIG. 34. The housing 71 has a plurality of inlets 712 in communication with an internal space of the housing 71. Each inlet 712 is in communication with one arc spray vent 33. A communication manner between the inlet 712 and the arc spray vent 33 may be any one of the foregoing connection manners. For example, the housing 71 includes an accommodation part 713 and a plurality of communication parts 714, and one inlet 712 is disposed at an end of each communication part 714 away from the accommodation part 713, a part of the communication part 714 that is provided with the inlet 712 is inserted into the arc spray vent 33. A communication manner between the housing 71 and the arc spray vent 33 is not described herein again.

In addition, a side wall of the housing 71 facing the busbar 6 has an outlet 711 in communication with the internal space of the housing 71. FIG. 35 shows an example of a position of still another outlet 711. The outlet 711 may be located on a side wall of the housing 71 facing any busbar 6. For example, the outlet 711 may be located on a side wall of the housing 71 facing one first busbar 61. In addition, the outlet 711 faces the bottom of the cabinet body 1. For example, FIG. 35 shows a bottom plate 13 of the cabinet body 1, and the outlet 711 faces the bottom plate 13. That is, after the cabinet body 1 is placed at a specified position, the outlet 711 faces downward.

Because the busbar 6 and the housing 71 are arranged in the width direction of the cabinet body 1, and the outlet 711 faces the bottom of the cabinet body 1, gas discharged from the outlet 711 of the housing 71 is not directly sprayed on the busbar 6, thereby reducing a possibility that the busbar 6 is scorched or blackened, and reducing a risk that the busbar 6 generates arcing, so that the power cabinet 100 operates more stably.

The outlet 711 on the housing 71 needs to be disposed only facing the bottom of the cabinet body 1, and there are a plurality of implementation forms. For example, refer to FIG. 34 and FIG. 35. The housing 71 includes an accommodation part 713, a communication part 714, and a protruding part 718. The accommodation part 713 and the busbar 6 are arranged in the width direction of the cabinet body 1. A plurality of inlets 712 are disposed on the communication part 714 and are in communication with an internal space of the accommodation part 713, and the protruding part 718 is fastened on a side of the accommodation part 713 facing the busbar 6. For example, the protruding part 718 is fastened on a side of the accommodation part 713 facing one first busbar 61, and the outlet 711 is disposed on a wall of the protruding part 718 facing the bottom of the cabinet body 1.

The outlet 711 is disposed on the wall of the protruding part 718 facing the bottom of the cabinet body 1, so that the outlet 711 is located on an outer side of the accommodation part 713, and the outlet 711 faces the bottom of the cabinet body 1. In this way, gas discharged from the outlet 711 is not directly sprayed on the busbar 6 on the side of the housing 71. After the circuit breaker 3 performs breaking, gas sprayed from the arc spray vent 33 is discharged from the outlet 711 of the housing 71, and is discharged toward the bottom of the cabinet body 1, thereby reducing impact on the busbar 6.

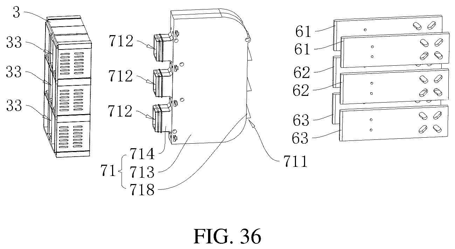

In some other examples, the outlet 711 is disposed on a side wall of the housing 71 away from the circuit breaker 3. For example, FIG. 36 shows an example of a structure of still another outlet 711. Refer to FIG. 36. The protruding part 718 is fastened on a side of the accommodation part 713 away from the circuit breaker 3, and the outlet 711 is disposed on a wall of the protruding part 718 facing the bottom of the cabinet body 1. That is, in this example, the outlet 711 is also disposed downward.

In some other examples, the outlet 711 faces the top of the cabinet body 1, that is, after the cabinet body 1 is placed at a specified position, the outlet 711 is disposed upward. In some other examples, the outlet 711 is an opening disposed on a side wall of the housing 71. For example, when the outlet 711 is disposed on a side wall of the housing 71 facing the busbar 6, the outlet 711 is disposed toward the busbar 6. For another example, when the outlet 711 is disposed on a side wall of the housing 71 away from the circuit breaker 3, the outlet 711 faces a side of the housing 71 away from the circuit breaker 3, that is, the outlet 711 faces a backplane of the cabinet body 1.

The outlet 711 is disposed on the side of the housing 71 facing the busbar 6, or the outlet 711 is disposed on the side of the housing 71 away from the circuit breaker 3, and the outlet 711 is not disposed at the bottom of the housing 71, which does not affect precipitation of impurities in the housing 71 at the bottom of the housing 71.

In some other examples, the outlet 711 is disposed at the top of the housing 71, or the outlet 711 is disposed at the bottom of the housing 71.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power cabinet, comprising a cabinet body, a circuit breaker, and a busbar, wherein the circuit breaker and the busbar are both fastened in the cabinet body, the circuit breaker is connected to the busbar, the circuit breaker has a plurality of arc spray vents facing the busbar, and an arrangement direction of the plurality of arc spray vents is perpendicular to an arrangement direction of the circuit breaker and the busbar;
the power cabinet further comprises a collection apparatus fastened in the cabinet body, the collection apparatus is located on a side of the circuit breaker facing the busbar, the collection apparatus comprises a housing and at least one baffle plate fastened in the housing, the housing has an outlet and a plurality of inlets, all the outlet and the plurality of inlets are in communication with an internal space of the housing, the plurality of inlets are located on a same side of the outlet in the arrangement direction of the plurality of arc spray vents, each inlet is in communication with one arc spray vent, and the baffle plate is disposed between at least two adjacent inlets; and
each baffle plate is fastened to a side wall of the housing facing the circuit breaker, and a channel exists between each baffle plate and a side wall of the housing away from the circuit breaker; or
each baffle plate is configured to separate the inlets on two sides, each baffle plate comprises at least one elastic inclined segment, an end portion of each inclined segment facing the outlet is configured to abut against the housing, an end portion of each inclined segment away from the outlet is fastened to the housing, and an included angle between a surface of the housing used to abut against the inclined segment and each inclined segment is an acute angle.

2. The power cabinet according to claim 1, wherein the power cabinet further comprises a cabinet door, the cabinet door is connected to the cabinet body, the cabinet door is capable of moving relative to the cabinet body, and the cabinet door is configured to block or open an internal space of the cabinet body; and
the plurality of arc spray vents are away from the cabinet door, the plurality of arc spray vents are arranged in a height direction of the cabinet body, and the outlet is located above the circuit breaker and faces the cabinet door.

3. The power cabinet according to claim 2, wherein the power cabinet further comprises a first protection plate and a second protection plate, the first protection plate is located above the circuit breaker, the first protection plate is farther away from the circuit breaker than the outlet, the second protection plate is located on a side of the outlet facing the cabinet door, and a space enclosed by the first protection plate, the second protection plate, and the circuit breaker is in communication with the outlet.

4. The power cabinet according to any one of claims 1 to 3, wherein the housing comprises an accommodation part and a plurality of communication parts fastened to the accommodation part, the plurality of communication parts protrude from the accommodation part to the circuit breaker, the plurality of communication parts are spaced apart in the arrangement direction of the plurality of arc spray vents, the inlet is disposed at an end portion of each communication part away from the accommodation part, and the outlet is disposed at the accommodation part; and
the baffle plate is fastened in the accommodation part, and the baffle plate is disposed between at least two adjacent communication parts.

5. The power cabinet according to claim 4, wherein an end portion of each communication part that is provided with the inlet is inserted into one arc spray vent, and
wherein the power cabinet further comprises a sealing structure, and each communication part is hermetically connected to a corresponding arc spray vent through the sealing structure, and
wherein the side wall of the housing away from the circuit breaker is disposed obliquely, and an end portion that is of the side wall of the housing away from the circuit breaker and that faces the outlet is farther away from the circuit breaker than an end portion away from the outlet, and
wherein the plurality of inlets are arranged in the height direction of the cabinet body, and a part of an inner surface of the housing is located below an inlet with a lowest height among the plurality of inlets.

6. The power cabinet according to any one of claims 1 to 5, wherein each baffle plate is fastened to the side wall of the housing facing the circuit breaker, each baffle plate has a first surface and a second surface, an arrangement direction of the first surface and the second surface is parallel to the arrangement direction of the plurality of arc spray vents, the first surface is closer to the outlet than the second surface, and the first surface is inclined toward the outlet in a direction from the circuit breaker to the housing.

7. The power cabinet according to claim 6, wherein the second surface is inclined toward the outlet in the direction from the circuit breaker to the housing, and
wherein each baffle plate comprises at least one inclined segment, each inclined segment has a plurality of slits, and the plurality of slits extend to an end portion of the inclined segment that is used to abut against the housing, and
wherein each baffle plate comprises at least one inclined segment, the collection apparatus further comprises a limiting block fastened in the housing, the limiting block is fastened on a side of the inclined segment facing the outlet and is configured to abut against the inclined segment, and the limiting block is located between an end portion of the inclined segment facing the outlet and an end portion of the inclined segment away from the outlet.

8. The power cabinet according to claim 7, wherein each baffle plate comprises two inclined segments, an arrangement direction of the two inclined segments is parallel to an arrangement direction of the housing and the circuit breaker, end portions of the two inclined segments away from the outlet are fastened to each other, an end portion of one inclined segment facing the outlet abuts against the side wall of the housing facing the circuit breaker, and an end portion of the other inclined segment facing the outlet abuts against the side wall of the housing away from the circuit breaker.

9. The power cabinet according to any one of claims 1 to 8, wherein the baffle plate is disposed between the outlet and an adjacent inlet, and
wherein the power cabinet further comprises a mounting plate fastened in the cabinet body, and the plurality of arc spray vents face the mounting plate; and
the housing is fastened to the mounting plate, a part of the housing is located on a side of the mounting plate away from the circuit breaker, the other part of the housing passes through the mounting plate and extends to a side of the mounting plate facing the circuit breaker, and the plurality of inlets are located on the side of the mounting plate facing the circuit breaker and are respectively in communication with corresponding arc spray vents.

10. The power cabinet according to claim 9, wherein the mounting plate has a through hole, the other part passes through the through hole and extends to the side of the mounting plate facing the circuit breaker, and the plurality of inlets are located at the other part, and
wherein the housing has a protruding plate, the protruding plate is located on the side of the mounting plate facing the circuit breaker, and the protruding plate is fastened to the mounting plate.

11. The power cabinet according to claim 10, wherein the power cabinet further comprises a fastener, the mounting plate has a first mounting hole, the protruding plate has a second mounting hole, and the fastener passes through the first mounting hole and the second mounting hole; and
at least a part of the fastener is elastic, two ends of the fastener in an axial direction of the first mounting hole are capable of moving in a radial direction of the first mounting hole, one end of the two ends has a first protrusion, and the first protrusion is located on a side of the protruding plate away from the mounting plate and is configured to abut against the protruding plate; and the other end of the two ends has a second protrusion, and the second protrusion is located on a side of the mounting plate away from the protruding plate and is configured to abut against the mounting plate.

12. The power cabinet according to claim 11, wherein a gap exists between a part of the fastener that is located in the first mounting hole and an inner wall surface of the first mounting hole, and a gap exists between a part of the fastener that is located in the second mounting hole and an inner wall surface of the second mounting hole.

13. The power cabinet according to any one of claims 9 to 10, wherein the power cabinet further comprises a mounting assembly, the mounting assembly comprises a sleeve and a bolt, the mounting plate has a first mounting hole, the sleeve passes through the first mounting hole, the bolt passes through the sleeve and is connected to the housing, one end of the sleeve abuts against a head of the bolt, the other end of the sleeve abuts against the housing, and a hole diameter of the first mounting hole is able to prevent the head of the bolt from passing through the first mounting hole; and
a length of the sleeve is greater than a thickness of the mounting plate, and/or a gap for the sleeve to move exists between a surface of the mounting plate that encloses to form the first mounting hole and an outer circumferential surface of the sleeve.

14. The power cabinet according to any one of claims 9 to 13, wherein the busbar passes through the mounting plate and is connected to the circuit breaker, and the busbar is fastened to the mounting plate.

15. A power cabinet, comprising a cabinet body, a circuit breaker, and a busbar, wherein the circuit breaker and the busbar are both fastened in the cabinet body, the circuit breaker is connected to the busbar, the circuit breaker has a plurality of arc spray vents facing the busbar, and the plurality of arc spray vents are arranged in a height direction of the cabinet body; and
the power cabinet further comprises a housing fastened in the cabinet body, the housing is located on a side of the circuit breaker facing the busbar, the housing and the busbar are arranged in a width direction of the cabinet body, the housing has a plurality of inlets in communication with an internal space of the housing, each inlet is in communication with one arc spray vent, and a side wall of the housing facing the busbar has an outlet in communication with the internal space of the housing, or a side wall of the housing away from the circuit breaker has an outlet in communication with the internal space of the housing.
